(19) Europäisches Patentamt
European Patent Office
Office européen des brevets

(11) EP 4 668 688 A1

(12) EUROPEAN PATENT APPLICATION

(43) Date of publication:
**24.12.2025 Bulletin 2025/52**

(21) Application number: **25183376.0**

(22) Date of filing: **17.06.2025**

(51) International Patent Classification (IPC):
***H04L 27/26*** *(2006.01)*

(52) Cooperative Patent Classification (CPC):
**H04L 27/262;** H04L 27/2613

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **20.06.2024 US 202463661994 P**
**07.08.2024 US 202463680313 P**
**31.10.2024 US 202418933734**

(71) Applicant: **Avago Technologies International Sales Pte. Limited**
**Singapore 768923 (SG)**

(72) Inventors:
- **Montreuil, Leo**
  **Irvine, 92618 (US)**
- **Porat, Ron**
  **Irvine, 92618 (US)**
- **Nassiri Toussi, Karim**
  **Irvine, 92618 (US)**
- **Pulikkoonattu, Rethnakaran**
  **Irvine, 92618 (US)**

(74) Representative: **Dilg, Haeusler, Schindelmann Patentanwaltsgesellschaft mbH**
**Leonrodstraße 58**
**80636 München (DE)**

# (54) MARKER SEQUENCES FOR EXTENDED LONG RANGE WIRELESS COMMUNICATIONS

(57) Aspects of the present solution provide improved sequences for extended long-range (ELR) communications. A sender (302) can generate a preamble for a physical layer protocol data unit (PPDU) frame of the ELR format to be transmitted to a receiver (304). The sender (302) can select, from a plurality of rows of an orthogonal matrix, a row corresponding to a basic service set (BSS) color of a plurality of BSS colors, and encode into a first symbol of the preamble, a sequence of values from a first set of columns of the row. The sender (302) can insert into a second symbol of the preamble, a second sequence of values from a second set of columns of the row, and transmit, to the receiver (304), the preamble with the first symbol and the second symbol to cause the receiver (304) to identify the BSS color of the sender (302) from the plurality of BSS colors.

300

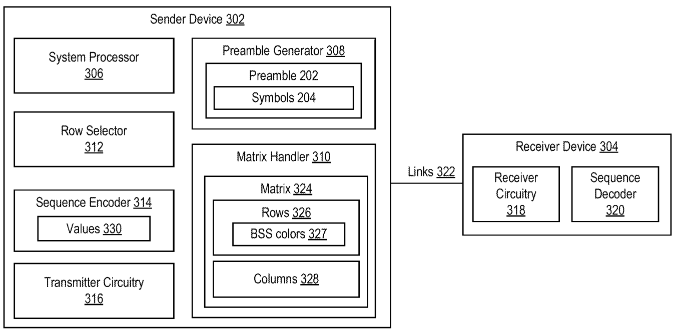


FIG. 3

EP 4 668 688 A1

## Description

## CROSS REFERENCE TO RELATED PATENT APPLICATIONS

The present application claims the benefit of and priority to U.S. provisional Patent Application No. 63/661,994 filed on June 20, 2024, and U.S. provisional Patent Application No. 63/680,313 filed on August 7, 2024, the disclosures of which is incorporated herein by reference in their entirety.

## FIELD OF DISCLOSURE

This disclosure generally relates to systems and methods of using marking sequences in extended long range wireless communications.

## BACKGROUND OF THE DISCLOSURE

The market for wireless communications devices has been growing due to increased use of portable devices, increased connectivity and data transfer between all manners of devices. Digital switching techniques have facilitated the large scale deployment of affordable, easy-to-use wireless communication networks. Wireless communication can operate in accordance with various standards, such as the IEEE 802.11x (e.g., Wi-Fi technology), Bluetooth, global system for mobile communications (GSM), code division multiple access (CDMA). Using such technologies, wireless communication devices can connect to local area networks and the internet without physical cables, communicating over radio frequencies and across various spaces and ranges.

## SUMMARY

The technical solutions of the present disclosure are directed to systems and methods of marker sequences for extended long range wireless communications. When transmitting data through a wireless channel, it can be challenging to operate a receiving device energy efficiently while managing link budget imbalance between uplink and downlink and extending the uplink range. In such situations, the receiving device can struggle to detect and decode the incoming data when the incoming data is in the noise range and the peak to average power ratio of the signal is low. In such situations, it can be beneficial for the receiving device to detect the basic service set (BSS) color of the device early in the transmission in order to implement early packet termination and conserve energy. The technical solutions can overcome these challenges by introducing enhanced long-range (ELR) mark symbols into the preamble that are generated using orthogonal matrices, such that the two ELR symbol sequences can be mirror images of each other, increasing their detectability by improving their peak to average power ratio (PAPR) at the receiver.

At least one aspect of the technical solution is directed to a system. The system can include a sender device. The sender device can generate a preamble for a physical layer protocol data unit (PPDU) frame of an enhanced long-range (ELR) format to be wirelessly transmitted to a receiver. The sender device can select from a plurality of rows of an orthogonal matrix, a row corresponding to a basic service set (BSS) color of a plurality of BSS colors. The sender device can encode into a first symbol of the preamble, a sequence of values from a first set of columns of the row. The sender device can insert into a second symbol of the preamble, a second sequence of values from a second set of columns of the row. the second sequence of values can include a reverse order of the sequence of values encoded in the first symbol. The sender device can transmit, to the receiver, the preamble with the first symbol and the second symbol to cause the receiver to identify the BSS color of the sender from the plurality of BSS colors.

The orthogonal matrix can be a matrix that can include a plurality of rows and a plurality of columns. An inner product of any two different rows has a result of zero. The sequence of values within the first symbol can include a first plurality of values of a first portion of a first row of the plurality of rows and the second symbol that can include a second plurality of values of a second portion of the first row. The orthogonal matrix can be constructed from a second orthogonal matrix. The second orthogonal matrix can include a number of rows that is a half of a number of rows of the orthogonal matrix and a number of columns that is a half of a number of columns of the orthogonal matrix. An inner product of any two different rows of the second orthogonal matrix has a result of zero.

The orthogonal matrix can include at least 64 rows and 96 columns and the second orthogonal matrix can include at least 32 rows and 48 columns. The sequence of values and the second sequence of values can be configured to reduce, at the receiver, a peak-to-average power ratio (PAPR) with respect to the first symbol and the second symbol to trigger an early packet termination. The sequence of values corresponds to a first half of the row and the second sequence corresponds to a second half of the row and the sequence. The second sequence can be configured to indicate, for the receiver, the BSS color of the sender.

The sender device can map, using the sequence of values of the first set of columns, 48 data tones indicative of the BSS to be indicated by the first symbol and map, using the second sequence of values for the second set of columns, a second 48 tones indicative of the BSS to be indicated by the second symbol. The second 48 tones can include tones that are in reverse order of tones of the 48 tones. The first symbol can include four pilot tones along with the 48 data tones and the second symbol can include a second four pilot tones along with the second 48 data tones. The sequence of values of the first symbol and the second sequence of values of the second symbol correspond to data tones that are modulated using at least one of: a quadrature binary phase-shift keying (Q-BPSK), a binary phase-shift keying (BPSK), quadrature phase-shift keying (QPSK), differential quadrature phase-shift keying (DQPSK), offset quadrature phase-shift keying (OQPSK) or quadrature amplitude modulation (QAM).

The first symbol and the second symbol of the preamble can be preceded by at least one of Legacy Short Training Field (L-STF) field, Legacy Long Training Field (L-LTF) field, Legacy Signal Field (L-SIG) field, Repeated Legacy Signal Field (RL-SIG) field, and Universal Signal Field (U-SIG2) field. The ELR format is configured for wireless communication using at least 20 MHz bandwidth at Wi-Fi communication bands of at least one of: 2.4 GHz, 5 GHz and 6 GHz.

At least one aspect of the technical solutions is directed to a method. The method can include generating, by one or more processors coupled with memory, a preamble for a physical layer protocol data unit (PPDU) frame of an enhanced long-range (ELR) format to be wirelessly transmitted to a receiver. The method can include selecting, by the one or more processors, from a plurality of rows of an orthogonal matrix, a row corresponding to a basic service set (BSS) color of a plurality of BSS colors. The method can include encoding, by the one or more processors, into a first symbol of the preamble, a sequence of values from a first set of columns of the row. The method can include inserting, by the one or more processors, into a second symbol of the preamble, a second sequence of values from a second set of columns of the row, the second sequence of values comprising a reverse order of the sequence of values encoded in the first symbol. The method can include transmitting, by the one or more processors, to the receiver, the preamble with the first symbol and the second symbol to cause the receiver to identify the BSS color of the sender from the plurality of BSS colors.

At least one aspect of the technical solution is directed to non-transient computer readable medium comprising processor readable instructions which, when executed by one or more processors, cause the one or more processors to generate a preamble for a physical layer protocol data unit (PPDU) frame of an enhanced long-range (ELR) format to be wirelessly transmitted to a receiver. The instruction can cause the one or more processors to select from a plurality of rows of an orthogonal matrix, a row corresponding to a basic service set (BSS) color of a plurality of BSS colors. The instruction can cause the one or more processors to encode into a first symbol of the preamble, a sequence of values from a first set of columns of the row. The instruction can cause the one or more processors to insert into a second symbol of the preamble, a second sequence of values from a second set of columns of the row. the second sequence of values can include a reverse order of the sequence of values encoded in the first symbol. The instruction can cause the one or more processors to transmit, to the receiver, the preamble with the first symbol and the second symbol to cause the receiver to identify the BSS color of the sender from the plurality of BSS colors.

## BRIEF DESCRIPTION OF DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.

FIG. 1A is a block diagram depicting a network environment including one or more access points in communication with one or more devices or stations, according to some embodiments.

FIGs. 1B and 1C are block diagrams depicting computing devices useful in connection with the methods and systems described herein, according to some embodiments.

FIG. 2 is a block diagram of an embodiment of an extended long range (ELR) packet.

FIG. 3 is a block diagram of a system for marker sequences for ELR wireless communications.

FIGs. 4A-4H are diagrams of embodiments of sequences for markers in an extended long range (ELR) packet.

FIGs 5A-5B are diagrams of embodiments of detection statistics of various embodiments of FIGS 3A-3H.

FIGs 6A-6D are diagrams of embodiments of marker sequences in HEX format.

FIGs 7A-7G are diagrams of embodiments of designed and implementation of marker sequences.

FIGs. 8 is an example of an orthogonality in a flat channel.

FIGs. 9A-9C are examples of an impact of channel response on the orthogonality of the flat channel.

FIG. 10 is an example of a tone plan for the maker sequence.

FIG. 11 is an example of an orthogonal matrix that includes 32 rows and 48 columns.

FIG. 12 is an example of a marker sequence for markers in an ELR packet.

FIGs. 13A-13C are diagrams of various detection statistics of the ELR maker sequence of FIG. 12.

FIG. 14 is a graph of Peak to Average Power Ratio (PAPR) of the ELR marker sequence of FIG. 12.

FIG. 15 is a flowchart of a method for marker sequences for ELR wireless communications.

The details of various embodiments of the methods and systems are set forth in the accompanying drawings and the description below.

## DETAILED DESCRIPTION

The following disclosure provides many different embodiments, or examples, for implementing different features of the provided subject matter. Specific examples of components and arrangements are described below to simplify the present disclosure. These are merely examples and are not intended to be limiting. For example, a first feature in communication with or communicatively coupled to a second feature in the description that follows can include embodiments in which the first feature is in direct communication with or directly coupled to the second feature and can also include embodiments in which additional features can intervene between the first and second features, such that the first feature is in indirect communication with or indirectly coupled to the second feature. In addition, the present disclosure can repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: Wi-Fi Alliance standards and IEEE 802.11 standards including but not limited to IEEE 802.11a™, IEEE 802.11b™, IEEE 802.11g™, IEEE P802.11n™; IEEE P802.11ac™; and IEEE P802.11be™ through IEEE P802.11bn™ standards. Although this disclosure can reference aspects of these standard(s), the disclosure is in no way limited by these standard(s).

For purposes of reading the description of the various embodiments below, the following descriptions of the sections of the specification and their respective contents can be helpful:

a. Section A describes a network environment and computing environment which can be useful for practicing embodiments described herein; and

b. Section B describes embodiments of systems and methods of using marking sequences in extended long range wireless communications, such as Wi-Fi.

## A. Computing and Network Environment

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (Wi-Fi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes one or more processors 121 (e.g., central processing unit), and one or more main memory units 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a Microchannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMAX and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

## B. Systems and Methods for Marker Sequences in ELR communications.

When transmitting data through a wireless channel, it can be challenging to operate a receiving device energy efficiently while managing link budget imbalance between uplink and downlink to extend the uplink range. With link budget imbalance occurring, the link between a sender device and the receiver device may not be symmetrical, therefore transmission performance can suffer at the sender device. In such situations, the receiving device can struggle to detect and decode the incoming data when the incoming data is in the noise range and the peak to average power ratio of the signal is low. When the receiver device cannot decode the incoming data, the receiver device can experience communication and routing problems as well as waste energy while attempting to process the receiving signals.

To overcome such challenges, it can be beneficial to increase the detectability of the incoming signals to allow the receiving device to quickly distinguish between various BSSs, allowing for early packet termination and conserving energy by the device. The technical solutions of this disclosure can increase the detectability of the incoming signals by introducing enhanced long-range (ELR) mark symbols into the preamble of the data packets. These ELR mark symbols can include a pair of sequences that are generated using orthogonal matrices, allowing them to include values that are mirror images of each other. Upon transmission of such a preamble, when the receiving device can be able to more accurately detect the incoming preamble, relying on the ELR mark symbols to distinguish between the target BSSs and the other BSS which the receiving device does not process. This can allow the receiving device to more quickly and efficiently distinguish between different BSSs, implementing the early packet termination in order conserve energy.

Aspects of the technical solutions can include improved sequences that are orthogonal and low PAPR for the ELR Marker. These sequences have lower PAPR (Peak to Average Power Ratio) than Hadamard sequences. The orthogonality between the 64 sequences provides an improved robustness against miss-classification (e.g., miss-interpretation of the BSS color). Using the improved sequences, the receiver device can terminate the packet early when miss classification occurs to decrease link budget, save computing resources, decrease overhead, and minimize utilization of the receiver device.

Extended long-range (ELR) communications can be a feature for Wi-Fi standards, such as the Wi-Fi8/UHR 802.11bn standard. The preamble of the ELR packets can include a marker, referred to as an ELR Marker, which can be used for packet classification. The ELR Marker can be used to identify one of the 64 Basic Service Set (BSS) colors. The ELR marker can be used for early termination when the destination does not match the BSS of the access point (AP) with which the receiver is configured to communicate.

The ELR Markers of the present solutions can be detectable with False Alarm Rate at Signal Noise Ratio (SNR) as low of -12dB. The solution can include improved sequences for ELR Markers that can be orthogonal and result in a reduced PAPR. These sequences for an ELR Market can have a reduced PAPR (Peak to Average Power Ratio) with respect to the sequences of other systems, such as the Hadamard sequences. The orthogonality between the sequences of the ELR Markers can provide an improved robustness against miss-classification or miss-interpretation of the BSS color in the incoming transmissions.

Embodiments of the present solutions can include designed and constructed ELR packets and sequences which can be based at least on one or more of the following target goals, such as in communications in 2.4 GHz, 5 GHz and 6 GHz Wi-Fi bands. These communications can be configured for up to 20 MHz BW, with minimum data rate of 1 Mbps with a SNR (signal nose ratio) around -10 dB, Close the STA (station) to AP (access point) power imbalance and the coverage gap. An AP can have more antennas than the STAs and AP can transmit at higher power per regulatory limits, and improved BSS range as 802.11b in 2.4 GHz with higher data rate.

Referring now to FIG. 2, an embodiment of an ELR or Ultra-High-Reliability (UHR)/ ELR packet 200 is depicted. The ELR packet 200 can include a preamble 202 that are configured or arranged to include the one or more Orthogonal Frequency Division Multiplexing (OFDM) symbols 204 (e.g., ELR-mark1 and ELR-mark2) which can also be referred to herein as symbols 204, ELR symbols 204 or markers 204. A preamble 202 can include any sequence of bits signaling the start of a data transmission, such as a network packet, data frame, a block of data frames or a physical layer protocol data unit (PPDU) frame for an ELR format. The preamble 202 can also include legacy symbols 206, such as L-STF, L-LTF, L-SIG, R-SIG, U-SIG, among other symbols that may be included. The OFDM symbols 204 can be used for packet format classification.

The two OFDM symbols 204 or markers 204 can be used for detection in low or negative signal to noise ratio (SNR) environments. Since the ELR-Markers 204 can rely on channel estimation, the ELR Markers 204 can be limited to 52 tones out of 64 tones used in L-LTF. The ELR-Markers 204 can map the 6-bit BSS color to one out of 64 sequences and can be used for early termination when the packet 200 BSS color does not match the access points (AP) own BSS color. A rotation of 90 degree between the first symbol to the next symbol can be applied to reduce the probability of false detection in BPSK (Binary Phase Shift Keying) modulated system configurations. The rotation may not impact the peak to average power ratio (PAPR). Using the ELR markers 204, the systems and methods described herein can reduce the link budget and increase detectability of the symbols 204 within the preamble 202 by a receiving device.

FIG. 3 is a block diagram of a system 300 for marker sequences for ELR wireless communications. The illustrated example system 300 can include a communication environment with communication systems (or communication apparatuses) such as a sender device 302 and a receiver device 304. The sender device 302 and the receiver device 304 can be configured to communicate with each other via one or more communication links 322. The sender device 302 can include one or more components to initiate transmission of data packets across a network, such as at least one system processor 306, preamble generator 308, matrix handler 310, row selector 312, sequence encoder 314, and transmitter circuitry 316. The sequence encoder 314 can include or provide values 330. The preamble generator 308 can construct, generate or provide at least one preamble 202 with the ELR symbols 204. The matrix handler 310 can generate, provide or manage one or more matrices 324 that can have any number of columns 328 as well as rows 326 that can include values that are indicative of basic service set (BSS) colors 327. Across a link 322, a receiver device 304 can include at least one of receiver circuitry 318 and a sequence decoder 320. The sender device 302 and the receiver device 304 can include one or more processors (e.g., 121) coupled with memory (e.g., 122) which can include, store and provide access to instructions, commands or data configuring the one or more processors (e.g., 121) to implement various functionalities of these devices described herein.

The sender device 302 can include any combination of hardware and software for providing signals that can be transmitted across one or more links 322. The sender device 302 can include any computing device, such as an access point of a wireless local area network (WLAN), such as a Wireless-Fidelity (Wi-Fi) router or access point, a smartphone, a computer or any other computing device configured for wireless communication and capable of transmitting wireless signals. The sender device 302 can also be configured to function as a receiver device 304 and can include any functionality of the receiver device 304.

For instance, the sender device 302 can include a transmitter communication system and the receiver device 304 can include a receiver communication system (sometimes referred to as "communication systems" herein). These components can operate together to exchange data through a wired or wireless medium (e.g., links 322). The sender device 302, as well as the receiver device 304, can include application specific integrated circuit (ASIC), field programmable gate array (FPGA), or any combination of these, in one or more embodiments. The sender and the receiver can include any network communication devices such as wireless local area network (WLAN) access points (e.g., Wi-Fi router), a smartphone device, a personal computer, a smartwatch or any other device configured for wireless or network communication. For example, communication systems include transceiver circuitry to allow bi-directional communication between the communication systems or with other communication systems. The sender device 302 can include a system processor 306, a preamble generator 308, a matrix handler 310, a row selector 312, a sequence encoder 314, and the transmitter circuitry 316.

The receiver device 304 can include any combination of hardware and software for receiving and processing transmissions from the sender device 302 via the links 322. The receiver device 304 can include one or more hardware components to receive data packets across a network, such as receiver circuitry 318 and at least one sequence decoder 320. The receiver device 304 can include a WLAN access point device, a computer, a smartphone or any other computing device capable of wireless communication. The receiver device 304 can be configured for any wireless communication, including WLAN communication, Bluetooth communication, cellular network communication, or any other radio frequency communication. The receiver device 304 can be configured to function as the sender device 302 and can include any functionality of the receiver device 304.

The links 322 for communication between the sender device 302 and the receiver device 302 can include any connection or functionality for providing connectivity between devices. The links 322 can include any combination of wired and wireless connections or communications using any networking techniques or any transmission of data between the sender device 302 and the receiver device 304, by allowing communication and interaction between the entities. For instance, links 322 can be established occur through Universal Serial Bus (USB) cables, Ethernet cables, High Definition Multi-Media Interface HDMI) cables, wireless local area network (WLAN) functionalities, such as Wi-Fi access points, Bluetooth devices, cellular networks, among others. The efficiency of the links 322 can vary based on the distance, signal strengths, and interference of the signal transmission. Using the aspects of the technical solution described herein, there can be an improvement of the false OBSS alarm rate and improved PAPR.

The system processor 306 of the sender device 302 can serve as a central processing unit (CPU) for executing instructions, processing data, and controlling the operation of the sender device 302. The system processor 306 can manage the flow of data transmitted into the transmitter circuitry 108 according to one or more protocols and standards as described herein. The system processor 306 can generate packets using packet formats such as any of the packet formats described herein. In some embodiments, system processor 306 generates, forms, creates or modifies packets to conform to any IEEE 802.11 standard for WLAN communication.

The system processor 306 can include a packet assembly unit to generate and encapsulate the data according to the packet format, such as the packet format of FIG. 2 and identifies the data to provide to the transmitter circuitry 316 for transmission. The system processor 306 identifies the data based on a plurality of tasks associated with the sender device 302, such as end-user inputs, sensor data, application logic, event based triggers, among others. For example, an end-user, interacting with the sender device 302, provides input data via a user interface. In this manner, the system processor 306 can identify that the input data is to be transmitted wirelessly. Upon identification of the data, the system processor 306 can provide the input data to the transmitter circuitry 316 for transmission to the receiver device 304.

The preamble generator 308 can include any combination of hardware and software for generating and utilizing preambles. The preamble 202 can include any portion of a communication packet or a frame that includes data (e.g., synchronization sequences, training symbols or other signals) that can be used by the receiver to synchronize the communication. The preamble generator 308 can establish synchronization between the sender device 302 and the receiver device 304. The preamble generator 308 can be integrated into Network Interface Cards (NICs), a baseband processor within the sender device 302, a FPGA, among others. The preamble generator 308 can generate a sequence of symbols 204 or bit patterns at the beginning of a data frame. The preamble generator 308 can include the data formats and the frames.

The matrix handler 310 can include any combination of hardware and software for managing, storing, or generating matrices 324 as described herein. A matrix 324 can be any square matrix of values arranged in rows and columns, whose rows and columns are orthonormal vectors. The matrices 324 can correspond to error correction codes, modulation and signal processing, data encoding, data decoding, transmission optimization, among other purposes for the matrices.

The matrices 324 can include a plurality of rows 326 and a plurality of columns 328. A row 326 of a matrix 324 can include or correspond to an orthonormal vector that can be perpendicular to all other rows in the matrix. Each row 326 can have its sequence of values arranged such that its dot product or inner product with any other row of the same matrix 324 produces an output of zero. The receiver device can include and utilize the matrix 324 to monitor, verify or detect the BSS colors 327 of the incoming preambles 202 in order to determine if the incoming preamble is for the particular BSS or other BSSs.

The matrix 324 at the receiver device 304 can be constructed or generated by the sequence decoder 320 such that the sequence decoder 320 constructs or generates the matrix 324 from a second orthogonal matrix, where the second orthogonal matrix can include a number of rows that is a half of a number of rows of the orthogonal matrix 324 and a number of columns that is a half of a number of columns of the orthogonal matrix 324. The inner product of any two different rows of the second orthogonal matrix can have a result of zero. The second orthogonal matrix can include, for example, one of the four quadrants of the matrix 324. The sequence decoder 320 can regenerate the matrix 324 by copying or flipping (e.g., mirror imaging) the second matrix, which can be any of the four quadrants of the matrix 324. In doing so, the sequence decoder 320 can save memory by storing only a quadrant of the matrix 324 and regenerating the matrix 324 from the four times smaller second matrix stored at the receiver device 304. For instance, the orthogonal matrix 324 (e.g., as shown in FIG. 12) can include at least 64 rows and 96 columns, while the second orthogonal matrix (e.g., a quadrant of the matrix 324) can include at least 32 rows and 48 columns (e.g., ¼ of the size of the matrix 324).

Each row 326 in the plurality of rows 326 can correspond to, indicate or include a plurality of basic service set (BSS) colors 327. A BSS color 327 can include a numerical identifier assigned to each BSS in a Wi-Fi network. A BSS can include a group of stations communicating over a shared wireless medium, which can be managed by an AP device facilitating their connectivity. The BSS color 327 can provide an identifier to differentiate between different station devices that correspond to different BSSs. The BSS color 327 can allow a receiver device 304 to distinguish a BSS of the receiver device 304 from other BSSs (OBSS devices with whom the receiver device 302 did not establish communications), allowing for the early packet termination processing of the received data packets when their preamble 202 identifies OBBSs, rather than the BSS of the receiver device 304.

The BSS colors 327 can identify a value corresponding to the row 326 and the column 328. The matrix handler 310 can receive indications of data transmitted and received between the sender device 302 and the receiver device 304. The matrix handler 310 can adjust the size of the matrix 324 based on the ELR mark symbols 204 as specified within the packet 200 as shown in FIG. 2.

The row selector 312 can include any combination of hardware and software for selecting, determining, or identifying a row 326 from the matrix 324. The row 326 of the matrix 324 can correspond to the BSS color 327. The BSS color 327 can be an infrastructure BSS color 327 or an independent BSS color 327. Each BSS color 327 can be identified by a service set identifier (SSID). The BSS color 327 can include an access point, stations, channels, among other components. The row selector 312 can be electrically coupled with the matrix handler 310 to retrieve the matrices to select the rows of the matrix for encoding. The row selector 312 can select or identify a column 328 of the matrix of the respective row 326.

The sequence encoder 314 can include any combination of hardware and software for encoding or decoding a sequence of values 330 within a symbol 204 of the preamble 202. The sequence encoder 314 can include the functionality (e.g., instructions, computer code or data) to encode into a first symbol 204 of the preamble 202 a sequence of values from a first set of columns of a row 326. For instance, the sequence encoder 314 can insert into the ELR mark1 (e.g., the first symbol 204 in the preamble 202) a first portion (e.g., first half) of a row 326 (e.g., corresponding to a sequence of values in columns 1-48 of the given row) of the matrix 324, as illustrated for example in FIG. 12. For instance, the sequence encoder 314 can insert into the ELR mark2 (e.g., the second symbol 204 in the preamble 202) a second portion (e.g., the second half) of the same row 326 (e.g., corresponding to a sequence of values in columns 49-96 of the same row) of the same matrix 324.

Transmitter circuitry 316 can include any combination of hardware and software for conditioning and communicating signals across the links 322. Transmitter circuitry 316 can include a transceiver with one or more signal processing circuit chains, for conditioning and processing signals for transmission or for conditioning and processing received signals. Transmitter circuitry 316 can include, for example, an RF signal processing chain configured for Wi-Fi wireless communication, cellular network communication, Bluetooth communication or any other type and form of wireless communication.

The transmitter circuitry 316 of the sender device 302 can include or correspond to a circuitry that receives the data from the system processor 306 and transmits a wireless signal 125 according to the data (e.g., preamble). The transmitter circuitry 316 can transmit, to the receiver device 304, the preamble 202 that includes the first symbol 204 (e.g., ELR mark1) and the second symbol 204 (e.g., ELR mark2) to cause the receiver to identify the BSS color 327 of the sender device 302 and distinguish it from the plurality of other BSS colors 327 of other BSSs. In one configuration, the transmitter circuitry 316 can be coupled between the system processor 306 and an antenna (not shown). In this configuration, the transmitter circuitry 316 converts the data from the system processor 306 onto a carrier signal to generate the wireless signal at an RF frequency (e.g., 10 MHz to 60 GHz), and transmits the wireless signal through the antenna. The receiver circuitry 318 of the receiver device 304 can be a circuitry that receives the wireless signal from the sender device 302, across the link 322, and obtains data from the received wireless signal.

The embodiments of the sequences (e.g., sequence 410, sequence 430, sequence 450, etc.) depicted in FIGs. 4A-4H are orthogonal and have low PAPR. The orthogonality of these sequences minimize the probabilities of miss-classification and provides headroom for ELR Marker power boosting if additional robustness in low SNR is desired. For the designated receiver, the sequence can be known a-priori, and all tones can be considered as pilot tones.

For the sequences depicted in FIGs. 4A-4H and 5A-5B, there can be multiple examples of matrices 324 (e.g., matrix 400, matrix 420, matrix 440) which can include 64 sequences of 104 bits (e.g., 52 bits for 52 tones of the first symbol and 52 bits for tones on second symbol), 64 sequences of 96 bits (e.g., 48 bits on 48 tones of first symbol and 48 bits on second symbol), and 32 sequences of 52 bits (e.g., 26 bits on half the tones of first symbol and 26 bits on half the tones of second symbol). The encoder For the 64 BSS colors, the 32 sequences can be re-used and set on the other half of the symbol tones. The first half to the second half tones can be orthogonal, and 32 sequences of 48 bits, 24 bits on half the tones of first symbol and 24 bits on half the tones of second symbol. For the 64 BSS colors, the 32 sequences can be re-used and set on the other half of the symbol tones. The first half to the second half tones can be orthogonal.

In the cases of 48 and 96-bit sequences, the sequences can occupy narrower bandwidth (BW) than 52 and 104-bit sequences, allowing for even more headroom for a power boost if needed. The 64 or 32 ELR Marker sequences can be a subset of a larger set of orthogonal sequences. The sequences can be selected to minimize the PAPR for the given OFDM tone indices allocation. The PAPR of the ELR Marker sequence can be lower than the ELR-data QPSK PAPR at 8.98 dB (90% CDF) for four duplicated RU52.

Referring to FIGs. 5A and 4B, detection statistics are illustrated for various embodiments of ELR Marker sequences of FIGS. 4A-4H. FIG. 5A illustrates detection statistics for the embodiments of FIGs. 4A-4C while FIG. 5A illustrates detection statistics for the embodiments of FIGS. 4D-4H.

Referring to FIGs. 6A-6D, various sequences of values 330 of the present solution are depicted in hexadecimal (HEX) format. To convert from the HEX format to +1,-1 sequence, the HEX values can be first converted to binary and then replace the 0 by -1 and the 1 with +1. In this manner, the marker sequences described herein can be encoded within the Hexadecimal format to save memory at the sender device 302. Referring to FIGs 7A-7G are diagrams of embodiments of design and implementation of a present solution for ELR marker sequences.

Referring to FIG. 8 is an example of orthogonality in a flat channel 800. In some instances, an ELR marker can lose orthogonality relative to other ELR markers (e.g., 63 other ELR markers in a 64x96 orthogonality matrix) while the signal passes through a channel 800. An example of an orthogonal matrix 802 can include 8 rows by 12 columns (8x12). Using the orthogonal matrix 802, a receiver device 304 or a sending device 302 can generate a larger matrix (e.g., ELR Mark matrix ) based on the systems and methods described herein. In this manner, the systems and methods described herein can reduce memory, utilization, and bandwidth by storing the smaller matrix (e.g., 8x12 matrix 800) by calculating a larger matrix (e.g., 64x96) from the example 800. Furthermore, by using a submatrix 802 the systems and methods described herein can reduce the occurrences of spurious correlation peaks within a wireless channel. A matrix product 804 can be achieved by multiplying the orthogonal matrix 802 by the conjugate transpose of the orthogonal matrix 802. By using the orthogonal matrix 802, the systems and methods descried herein can minimize the false alarms from overlapping basic service set (OBSS). The spurious correlation peaks can occur at the same position within the matrix, thereby adding up to result in a high false alarm OBSS rate.

FIGs. 9A-9C are examples of an impact of channel response on the orthogonality of the flat channel. FIG. 9A depicts an example 900 of the channel response of a flat channel measured in decibels (dB). FIG. 9B depicts an example of a Hadamard 910 matrix that includes a plurality of spurious peaks 912. As shown in FIG. 9B, the Hadamard 910 can include spurious peaks at approximately -17.9 dB with a distance of +/- 12 and +/- 24 from a diagonal of the corresponding matrix. The Hadamard 910 can be a Kronecker product of a Hadamard 4 matrix and a Hadamard 12 matrix.

FIG. 9C depicts an example of a Hadamard 920 matrix using the systems and methods described herein. The Hadamard 920 can include a max peak at -25.0 dB without a distance from the matrix diagonal as shown in the Hadamard 910. For a 64x96 matrix, the Hadamard 920 can result in the distance of the peaks to be less than or equal to +/- 12 and +/-24. However, when the peaks from the first ELR Marker and the second ELR Marker are in alignment, it results in a high False Alarm Color rate. Reversing the sequence order (e.g., from left to right) on the second symbol can reduce the False Alarm Color rate because the peaks of the first and the second symbol will not align.

FIG. 10 is an example 1000 of an ELR marker tone plan for the maker sequence. The ELR marker tone plan can be two orthogonal frequency decision multiplexing (OFDM) symbols (e.g., 48 data tones and 4 pilots). For the data tones, the data tones can be Q- Binary Phase Shift Keying (Q-BPSK) mapped and the pilots can be modulated using the BPSK.

FIG. 11 is an example of an orthogonal matrix 1100 that includes 32 rows and 48 columns. The matrix 1102 shows an expression that can be used to generate each of the four quadrants of the ELR Mark matrix using a single matrix. For instance, expression 1102 can include four quadrants of a larger orthogonal matrix being generated using two copies of the original orthogonal matrix on the left side (e.g., upper left and lower left quadrants) and two mirror images of those orthogonal matrices on the right side (e.g., the upper right and the lower right quadrants), thereby producing a larger orthogonal matrix from the smaller matrices. Expressions 1102 and 1104 are also presented below:

Expression 1102 shows how a smaller orthogonal matrix can be used to create four quadrants of a larger orthogonal matrix, as follows:

$\hat{H} = \begin{pmatrix} H & +H\mathbb{J} \\ H & -H\mathbb{J} \end{pmatrix}$, where Hj corresponds to an orthogonal matrix that is a mirror image or reflection of orthogonal matrix H about a column boundary (e.g., y-axis), thereby resulting in columns permuting from right to left; where -Hj is a negation (e.g., additive inverse) of HJ and HJ is a multiplication of two matrices H and matrix J, which is shown in Expression 1104 below.

The expression 1104 shows a special matrix that can be used for multiplication with H matrix (e.g., matrix 1100) to generate the upper right and lower right quadrants of a larger matrix, as follows:

Expression 1104: $$\mathbb{J} = \begin{pmatrix} 0 & 0 & \cdots & \cdots & 1 \\ 0 & \vdots & \ddots & 1 & 0 \\ \vdots & \ddots & \ddots & \vdots & \vdots \\ 1 & 0 & 0 & \ddots & 0 \end{pmatrix}$$

Expression 1104 can represent a matrix computation that can be used to multiply the orthogonal matrix 1100 by a special matrix 1104. This computation can allow for reflecting or mirror-imaging the orthogonal matrix 1100 across the y-axis to generate a second orthogonal matrix 1202. To reflect the orthogonal matrix 1100, the matrix calculation can permute each value 330 in the sequence of values 330 across each column 328 within a row 326 for insertion into the respective quadrant of the ELR Mark matrix.

FIG. 12 is an example of a marker sequence 1200 within an ELR Mark matrix 324, which can be extracted or copied from the matrix 324 and encoded or inserted into the ELR symbols 204 of the ELR packet. The ELR Mark matrix 324 can include 64 rows and 96 columns that store a sequence of values. Each value within the sequence of values can be a +/-1 that can be randomly or selectively distributed across the row. The ELR Mark matrix can be orthogonal such that transpose ELR Mark matrix is equal to the identity ELR Mark matrix. To generate the ELR Mark Matrix, the systems and methods described herein, can use the orthogonal matrix 1100 by performing one or more matrix calculations to reduce storage and increase detection of the symbols within the preamble. For instance, one of the four quadrants of the ELR mark matrix can be used to generate the remaining four quadrants. By making the matrix orthogonal, the sequences of values from any of the 64 rows of the matrix can have the first 48 values (e.g., 1-48) of that row be mirror images of the 48 values of the remainder of that row (e.g., 49-96).

In further detail, the sender device 302 or the receiver device processor 304 can use the orthogonal matrix 1100 to generate maker sequence 1200 of the ELR mark matrix 324 by perform the one or more matrix calculations. The one or more matrix calculations can include at least one of a reflection across the y-axis, a negation, or matrix multiplication. By performing each of the one or more matrix calculations, the sender device 302 and the receiver device 304 can generate one or more orthogonal matrices (e.g., matrix 1202, matrix 1204) to form the ELR mark matrix 324. For example, the receiver device 304 can execute a matrix calculation to multiply the orthogonal matrix 1100 by the special matrix 1104. Once multiplied, the receiver device 304 can reflect the orthogonal matrix 1100 across the y-axis to generate a second orthogonal matrix 1202. To reflect the orthogonal matrix 1100, the matrix calculation can permute each value 330 in the sequence of values 330 across each column 328 within a row 326. Once reflected, the receiver device 104 can insert the orthogonal matrix 1202 into the respective quadrant of the ELR Mark matrix.

In another example, the receiver device 304 can execute a matrix calculation to multiply the orthogonal matrix 1100 by the special matrix 1104. Once multiplied, the receiver device 304 can execute the matrix calculation to negate the orthogonal matrix 1100 to generate a third orthogonal matrix 1204. To negate the orthogonal matrix 1100, the matrix calculation can multiply each value 330 in the sequence of values 330 by (-1). Once reflected, the receiver device 104 can insert the orthogonal matrix 1202 into the respective quadrant of the ELR Mark matrix. Upon calculating the second orthogonal matrix 1202 and the third orthogonal matrix 1204, the receiver device 304 can duplicate the orthogonal matrix 1100 into the respective quadrant to generate or construct the ELR Mark matrix with the respective sequence of values 330 as shown in FIG. 12. In some instances the third orthogonal matrix 1204 include elements or values 330 are an additive inverse of the corresponding elements/values of the second orthogonal matrix 1202.

FIGs. 13A-13C are diagrams of various detection statistics of the ELR maker sequence of FIG. 11. The plots show CDF plots for detection performance based on known or unknown data transmitted with or without RF impairments and Phase tracking. The detection performance can show probabilities of misclassification or false alarms of the ELR preamble. As shown in FIGs 12A-12C, the miss rate for NonELR transmissions can indicate an optimal threshold 1304 for the ELR preamble. The Probability of a miss 1302 can indicate the probability for the ELR preamble to miss using conventional solutions. FIG 12A includes a graph of all probabilities of an ELR miss 1306. Using the systems and methods described herein, the probability of a miss 1306 deviates from the threshold 1304 by a smaller delta than conventional solutions. FIG. 14 is a graph of Peak to Average Power Ratio (PAPR) of the ELR marker sequence of FIG. 11.

Referring again to FIG. 3, the preamble generator 308 can generate, create, or otherwise determine the preamble 202 for a physical layer protocol data unit (PPDU) frame of an enhanced long range (ELR) format to be wirelessly transmitted to the receiver device 304. The ELR format can be configured for wireless communication using at least 20 MHz bandwidth at Wi-Fi communication bands of at least one of: 2.4 GHz, 5 GHz and 6 GHz to generate the preamble 202, the preamble generator 308 can determine the structure of the preamble according to the data format (e.g., ELR) and the format (e.g., PPDU). For the technical solution, the ELR PPDU can be within a 20MHz bandwidth. Upon the determined structure, the preamble generator 308 can generate the plurality of symbols 204 such as ELR symbols, synchronization symbols, channel estimation signals, access control symbols, among other symbols. As shown in FIG. 2, the ELR Mark symbols 204 can include a predefined tone pattern. The predefined tone pattern can be used by the receiver device 304 to generate the ELR Mark matrix (e.g., 64x96 matrix). The predefined tone pattern can include a sequence of values 330 (e.g., +/- 1) to define the marker sequence of the ELR Mark matrix. Using the predefined tone pattern, the preamble 202 can optimize detection performance by the receiver device 304. Using the ELR Mark symbols 204, the receiver device 304 can minimize missed and false detection probabilities.

Continuing on, the ELR Mark symbols 204 can include a plurality of OFDM symbols (e.g., ELR-Mark1 and ELR Mark2). Each of the ELR Mark symbols 204 can classify an ELR-PPDU format upon reception of the data packet by the receiver device 304. Each of the OFDM symbols 204 can include BSS color 327 information (64 BSS colors corresponding to at least 64 orthogonal sequences), a 52-tone block that includes 4 pilots and 48 data tones, while using a duration of 4 microseconds (e.g., 3.2 microseconds + GI = 0.8 microseconds). The 48 data tones can carry or include an ELR mark sequence described herein. A duo-binary sequence block of 48 elements to define the ELR Mark. Each of the 48 elements can be mapped to Q-BPSK symbols (e.g., +/-j) to form the ELR-Mark. The pilots in the ELR symbols 204 can be BPSK modulated (e.g., +/- 1) to maintain orthogonality of the ELR Mark.

The matrix handler 310 can generate the ELR Mark matrix 1200 as shown in FIG. 12. The ELR Mark matrix 1200 (e.g., 64x96 orthogonal matrix) can be formed by using a submatrix 1302 (e.g., 32x48 orthogonal matrix) through the equation (1.1):

$$H_{64x96} = [+H_{32x48}, +H_{32x48}(:,48:-1:1) + H_{32x48}, -H_{32x48}, (:,48:-1:1)]$$

An example of the submatrix 1302 can be seen in FIG. 11. By using the submatrix 1100, the sender device 302 and the receiver device 304 can save memory, computing resources, and utilization by storing the submatrix 1100 and executing equation 1.1 to generate the 64x96 orthogonal matrix. For example, once the link 322 is established between the sender device 302 and the receiver device 304, the system processor 306 can trigger the matrix handler 310 to generate the ELR Mark matrix 1200 by generating a 32x48 orthogonal matrix 1100 based on the OFDM symbols. Once the 32x48 orthogonal matrix 1100 is generated, the matrix handler 310 can execute the equation 1.1 using the 32x48 orthogonal matrix 1100 to generate the 64x96 ELR Mark Matrix 1200, as shown in FIG. 12.

In further detail, the row selector 312 can select, identify or otherwise determine a row 326 from a plurality of rows 326 within the 64x96 orthogonal submatrix 1200 (e.g., ELR Mark matrix 1200). The ELR Mark Matrix 1200 can include the plurality of rows which correspond to the BSS colors 1-64, whereas the columns 1-48 can be transmitted along the data portion of the first symbol 204 (e.g., first 48 tones) and the columns 49-96 can be transmitted along the data portion of the second symbol (e.g., second 48 tones). The first symbol 204 can correspond to the ELR Mark-1 symbol 204 and the second symbol can correspond to the ELR Mark-2 symbol 204. From the selected row 326, the row selector 312 can identify a respective value 330 in the columns 328 of the respective row326. Once identified, the row selector 312 can extract and store the value 330. The row selector 312 can iteratively identify, extract, and store each value 330 for each selected row 326 within the ELR Mark Matrix 1200. However, executing this process at both the sender device 302 and the receiver device 304 can use significant computing resources. Therefore, using the equation 1.1 in conjunction with the various components described herein can reduce the wasted computing resources at the receiver device 304 and the sender device 302.

Upon completion of each row in the ELR Mark Matrix 1200, the sequence encoder 314 can encode, insert or otherwise decode a sequence of values 330 from a first set of columns 328 of the selected row 326. For example, the ELR Mark Matrix 1200 can include values of either 1 or -1. In a first row 324, the row selector 312 can select row"1" from the ELR Mark Matrix 1200. Across row "1", the row selector 312 can extract a value "1" from column one, a value "-1" from column two, a value "1" from column three, and so on. Once the value 330 associated with each column is extracted, the sequence encoder 314 can encode the sequence of values 330 from the first set of columns 328. The first set of columns can correspond to the first 48 data tones in the ELR Mark Matrix 1200. The sequence encoder 314 can encode the sequence of values into the first symbol (e.g., ELR-Mark 1) of the preamble. The first symbol can include four pilot tones along with the 48 data tones. Since the sender device 302 can function as the receiver device 304, the sequence encoder 33 can decode the sequence of values 330 received from the receiver device 304.

Continuing on, the sequence encoder 314 can generate a second sequence of values 330 from a second set of columns 328 of the row 326. The second set of columns 328 of the row 326 can correspond to the second 48 data tones in the ELR Mark Matrix 1200. The second symbol can include a second four pilot tones along with the second 48 data tones. The second sequence of values 330 can include a reverse order of the encoded sequence of values 330 in the first symbol 204. For example, a first sequence of values 330 can be -1, -1, -1, 1, - 1, -1, 1 for the first symbol 204. Therefore, the sequence encoder 314 can generate the second sequence of values 330 as 1, -1, -1, 1, -1, -1, -1 by reversing the order of the first sequence of values 330. Once the second sequence of values 330 can be generated, the sequence encoder 314 can insert the second sequence of values 330 into a second symbol (e.g., ELR-Mark 2) of the preamble 02. In some instances, the sequence of values 330 can correspond to a first half of the row 326. In some instances, the second sequence of values 330 can correspond to a second half of the row 326. From here, the sequence encoder 33 can configure the sequence of values 330 and the second sequence of values 330 to indicate, for the receiver device 304, the BSS colors 327 of the sender device 302. Furthermore, the sequence encoder 33 can configure the sequence of values 330 and the second sequence of values 330 to reduce, at the receiver device 304, a peak-to-average power ratio (PAPR) with respect to the first symbol 204 and the second symbol 204 to trigger an early packet termination. To reduce the PAPR, the receiver device 304 can recognize the tone pattern of the first sequence of values 330 that form the submatrix 110 since the ELR mark matrix 1200 can be formed from the submatrix 1000 using equation 1.1.

The sequence of values 330 of the first symbol 204 and the second sequence of values 330 of the second symbol 204 can correspond to data tones that can be modulated using at least one of: a quadrature binary phase-shift keying (Q-BPSK), a binary phase-shift keying (BPSK), quadrature phase-shift keying (QPSK), differential quadrature phase-shift keying (DQPSK), offset quadrature phase-shift keying (OQPSK) or quadrature amplitude modulation (QAM). The first symbol and the second symbol can be preceded by at least one of Legacy Short Training Field (L-STF) field, Legacy Long Training Field (L-LTF) field, Legacy Signal Field (L-SIG) field, Repeated Legacy Signal Field (RL-SIG) field, and Universal Signal Field (U-SIG2) field. In some instances, the sequence encoder 33 can map, using the sequence of values 330 of the first set of columns 328, 48 data tones indicative of the BSS colors 327 to be indicated by the first symbol 204 and map, using the second sequence of values 330 for the second set of columns 328, a second 48 tones indicative of the BSS 327 to be indicated by the second symbol 204.

The transmitter circuitry 316 can transmit the preamble 202 to the receiver device 304 via the link 322. The transmitter circuitry 316 can transmit the preamble 202 as a wireless signal to the receiver device 304. The wireless signal can be any transmission signals or data transmitted between devices. The wireless signal can include a plurality of electromagnetic waves or electrical impulses, such as radio frequency (RF) transmissions for WLAN (e.g., Wi-Fi), Bluetooth, cellular or any other transmissions. The signal can include the PPDU frames to be transmitted along with the preamble 202 for ELR format. The signals can be in the form of radio waves, microwaves, infrared signals, pulses of light. These signals can carry encoded information, such as audio, video, or digital data, and can travel through a medium (e.g., air or cables), to reach the intended receiver device 304. Advanced modulation techniques and signal processing methods can be used for efficient and reliable transmission, mitigating noise and interference for clear communication.

The receiver circuitry 318 of the receiver device 304 can be a circuitry that receives the wireless signal from the sender device 302, across the link 322, and obtains data from the received wireless signal. In one configuration, the receiver circuitry 318 can be coupled between the sequence decoder 320 and an antenna. In this configuration, the receiver circuitry 318 can receive the wireless signal through an antenna and converts the wireless signal at an RF frequency according to a carrier signal to obtain the data from the wireless signal. The receiver circuitry 318 can provide the preamble 202 to the sequence decoder 320.

The sequence decoder 320 of the receiver device 304 can function similar to the sequence encoder 33 of the sender device 102. The sequence decoder 320 can decode, encode, or otherwise extract the sequence of values 330 from the first symbol 204 or the second symbol 204 of the preamble 202. To save computing resources, save storage, and reduce overhead, the sequence decoder 320 can decode the sequence of values 330 in the first symbol and execute equation 1.1 to generate the second sequence of values 330 for the second symbol 204. In this manner, the sequence decoder 320 does not need to decode both the first sequence of values 330 of the first symbol 204 and the second sequence of values 330 of the second symbol 204. For example, the sequence decoder 320 can construct the ELR Mark Matrix 1200 from the first sequence of values 330 within the first symbol (e.g., ELR-Mark 1, 32x48 submatrix 1100). The submatrix 1100 can include a number of rows 326 that is a half of a number of rows 326 of the orthogonal matrix (e.g., ELR Mark Matrix 1200) and a number of columns 328 that is a half of a number of columns 328 of the orthogonal matrix.

FIG. 15 is a flowchart of a method 1500 for marker sequences for ELR wireless communications. For example, example method 1500 can be implemented using example system 300 or any features of techniques as discussed in connection with FIGs. 3-3. For instance, the method 1500 can be implemented using example system 300 deployed in connection with a WLAN access point device or any other computing device that can operate in accordance with 802.11 wireless standard (e.g., 802.11bn).

At step 1505, a sender device can generate a preamble for a physical layer protocol data unit (PPDU) frame of an enhanced long-range (ELR) format to be wirelessly transmitted to a receiver. For instance, the sender device can identify any type of data transmitted to the receiver device according to the ELR format and generate the preamble to the PPDU frame of the ELR format. The ELR format can configured for wireless communication using at least 20 MHz bandwidth at Wi-Fi communication bands of at least one of: 2.4 GHz, 5 GHz and 6 GHz. For example, For example, the ELR can be configured for 10-20 MHz bandwidth at a Wi-Fi communication band of 2.4GHz.

At step 1510, the sender device can select from a plurality of rows of an orthogonal matrix, a row corresponding to a basic service set (BSS) color of a plurality of BSS colors. For example, the sender device can select row twelve of the orthogonal matrix that includes BSS colors 1-64. The orthogonal matrix can be a matrix that includes a plurality of rows and a plurality of columns. When taking the inner product of any two different rows, the result can be zero. For example, the inner product of rows one and fourteen can be zero. The orthogonal matrix (e.g., 64x 96 matrix) can be constructed from a second orthogonal matrix (e.g., 32x 48 matrix). For example, the orthogonal matrix can be constructed from the second orthogonal matrix by executing a matrix equation. The second orthogonal matrix an include a number of rows that is a half of a number of rows of the orthogonal matrix and a number of columns that is a half of a number of columns of the orthogonal matrix. An inner product of any two different rows of the second orthogonal matrix can have a result of zero. The orthogonal matrix can include at least 64 rows and 96 columns and the second orthogonal matrix can include at least 32 rows and 48 columns.

At step 1515, the sender device can encode into a first symbol of the preamble, a sequence of values from a first set of columns of the row. For example, the seder device can encode the sequence of values into the symbol ELR-Mark 1. The sequence of values within the first symbol includes a first plurality of values of a first portion of a first row of the plurality of rows. The first portion of the first row can correspond to one or more columns in the orthogonal matrix. The sequence of values corresponds to a first half of the row of the orthogonal matrix. For example, the sequence of values can be the rows 1-32 of the orthogonal matrix that includes 64 rows. The first symbol can include at least four pilot tones along with the 48 data tones.

At step 1520, the sender device can insert into a second symbol of the preamble, a second sequence of values from a second set of columns of the row. For example, the seder device can encode the sequence of values into the symbol ELR-Mark 2. The second symbol can include a second four pilot tones along with the second 48 data tones. The sequence of values of the first symbol and the second sequence of values of the second symbol can correspond to data tones that are modulated using at least one of: a quadrature binary phase-shift keying (Q-BPSK), a binary phase-shift keying (BPSK), quadrature phase-shift keying (QPSK), differential quadrature phase-shift keying (DQPSK), offset quadrature phase-shift keying (OQPSK) or quadrature amplitude modulation (QAM).

The second sequence of values can include a reverse order of the sequence of values encoded in the first symbol. The second symbol can include a second plurality of values of a second portion of the first row. The second portion of the second row can correspond to one or more columns in the orthogonal matrix. The second sequence can correspond to a second half of the row. For example, the sequence of values can be the rows 33-64 of the orthogonal matrix that includes 64 rows. The sequence and the second sequence can be configured to indicate, for the receiver, the BSS color of the sender.

The sender device can map, using the sequence of values of the first set of columns, 48 data tones indicative of the BSS to be indicated by the first symbol. The sender device can map, using the second sequence of values for the second set of columns, a second 48 tones indicative of the BSS to be indicated by the second symbol. The second 48 tones can include tones that are in the reverse order of tones of the 48 tones.

At step 1525, the sender device can transmit, to the receiver, the preamble with the first symbol and the second symbol to cause the receiver to identify the BSS color of the sender from the plurality of BSS colors. The first symbol and the second symbol of the preamble can be preceded by at least one of Legacy Short Training Field (L-STF) field, Legacy Long Training Field (L-LTF) field, Legacy Signal Field (L-SIG) field, Repeated Legacy Signal Field (RL-SIG) field, and Universal Signal Field (U-SIG2) field. the sequence of values and the second sequence of values are configured to reduce, at the receiver, a peak-to-average power ratio (PAPR) with respect to the first symbol and the second symbol to trigger an early packet termination.

Upon rejection of the preamble, the receiver device can use receiver circuitry to extract the sequence of values within the first symbol, without extracting the values of the second symbol. Rather, the receiver device can calculate the sequence of values within the second symbol by using the matrix equation since the second sequence of values are in a reverse order of the first sequence of value. By using the second sequence of values in the reverse order, the systems and methods described herein can reduce the occurrence of False BSS color alarm rates. Furthermore, the reverse order of the second sequence of values and the submatrix formed into the orthogonal matrix can reduce the occurrence of spurious peaks that occur during the transmission of data.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A,' only 'B', as well as both 'A' and 'B'. Such references used in conjunction with "comprising" or other open terminology can include additional items.

It should be noted that certain passages of this disclosure may reference terms such as "first" and "second" in connection with devices, mode of operation, transmit chains, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected includes indirect and direct couplings and connections.

It should be understood that the systems described above may provide multiple ones of any or each of those components and these components may be provided on either a standalone machine or, in some embodiments, on multiple machines in a distributed system. In addition, the systems and methods described above may be provided as one or more computer-readable programs or executable instructions embodied on or in one or more articles of manufacture. The article of manufacture may be a floppy disk, a hard disk, a CD-ROM, a flash memory card, a PROM, a RAM, a ROM, or a magnetic tape. In general, the computer-readable programs may be implemented in any programming language, such as LISP, PERL, C, C++, C#, PROLOG, or in any byte code language such as JAVA. The software programs or executable instructions may be stored on or in one or more articles of manufacture as object code.

While the foregoing written description of the methods and systems enables one of ordinary skill to make and use what is considered presently to be the best mode thereof, those of ordinary skill will understand and appreciate the existence of variations, combinations, and equivalents of the specific embodiment, method, and examples herein. The present Method and system should therefore not be limited by the above described embodiments, methods, and examples, but by all embodiments and methods within the scope and spirit of the disclosure. The headings provided in this document are non-limiting.

## Claims

1. A system, comprising:
one or more processors (306) of a sender (302) coupled with memory and configured to:

    generate a preamble for a physical layer protocol data unit, PPDU, frame of an enhanced long-range, ELR, format to be wirelessly transmitted to a receiver (304);
    select, from a plurality of rows of an orthogonal matrix, a row corresponding to a basic service set, BSS, color of a plurality of BSS colors;
    encode into a first symbol of the preamble, a sequence of values from a first set of columns of the row;
    insert into a second symbol of the preamble, a second sequence of values from a second set of columns of the row, the second sequence of values comprising a reverse order of the sequence of values encoded in the first symbol; and
    transmit, to the receiver (304), the preamble with the first symbol and the second symbol to cause the receiver (304) to identify the BSS color of the sender (302) from the plurality of BSS colors.

2. The system of claim 1, wherein the orthogonal matrix is a matrix that comprises a plurality of rows and a plurality of columns, wherein an inner product of any two different rows has a result of zero;
in particular wherein the sequence of values within the first symbol includes a first plurality of values of a first portion of a first row of the plurality of rows and the second symbol includes a second plurality of values of a second portion of the first row.

3. The system of claim 1 or 2, wherein the orthogonal matrix is constructed from a second orthogonal matrix, the second orthogonal matrix comprising a number of rows that is a half of a number of rows of the orthogonal matrix and a number of columns that is a half of a number of columns of the orthogonal matrix, wherein an inner product of any two different rows of the second orthogonal matrix has a result of zero.

4. The system of claim 3, the one or more processors (306) to:
generate a third orthogonal matrix that is a mirror image of the second orthogonal matrix across a vertical axis that splits the orthogonal matrix into two halves, a first half of the two halves including an upper left quadrant comprising the second orthogonal matrix and a lower left quadrant comprising the second orthogonal matrix, and a second half of the two halves including an upper right quadrant comprising the third orthogonal matrix and a lower right quadrant comprising a fourth orthogonal matrix whose elements are an additive inverse of the corresponding elements of the third orthogonal matrix.

5. The system of claim 3 or 4, wherein the orthogonal matrix comprises at least 64 rows and 96 columns and the second orthogonal matrix comprises at least 32 rows and 48 columns.

6. The system of any of claims 1 to 5, wherein the sequence of values and the second sequence of values are configured to reduce, at the receiver (304), a peak-to-average power ratio, PAPR, with respect to the first symbol and the second symbol to trigger an early packet termination.

7. The system of any of claims 1 to 6, wherein the sequence of values corresponds to a first half of the row and the second sequence corresponds to a second half of the row and wherein the sequence and the second sequence are configured to indicate, for the receiver (304), the BSS color of the sender (302).

8. The system of any of claims 1 to 7, the one or more processors (306) to:

    map, using the sequence of values of the first set of columns, 48 data tones indicative of the BSS to be indicated by the first symbol; and
    map, using the second sequence of values for the second set of columns, a second 48 tones indicative of the BSS to be indicated by the second symbol, wherein the second 48 tones comprise tones that are in reverse order of tones of the 48 tones.

9. The system of claim 7 or 8, wherein the first symbol comprises four pilot tones along with the 48 data tones and the second symbol comprises a second four pilot tones along with the second 48 data tones.

10. The system of any of claims 1 to 9, comprising at least one of the following features:

I: wherein the sequence of values of the first symbol and the second sequence of values of the second symbol correspond to data tones that are modulated using at least one of: a quadrature binary phase-shift keying, Q-BPSK, a binary phase-shift keying, BPSK, quadrature phase-shift keying, QPSK, differential quadrature phase-shift keying, DQPSK, offset quadrature phase-shift keying, OQPSK, or quadrature amplitude modulation, QAM;
II: wherein the first symbol and the second symbol of the preamble are preceded by at least one of Legacy Short Training Field, L-STF, field, Legacy Long Training Field, L-LTF, field, Legacy Signal Field, L-SIG, field, Repeated Legacy Signal Field, RL-SIG, field, and Universal Signal Field, U-SIG2, field;
III: wherein the ELR format is configured for wireless communication using at least 20 MHz bandwidth at Wi-Fi communication bands of at least one of: 2.4 GHz, 5 GHz and 6 GHz.

**11.** A method, comprising:

generating, by one or more processors (306) coupled with memory, a preamble for a physical layer protocol data unit, PPDU, frame of an enhanced long-range, ELR, format to be wirelessly transmitted to a receiver (304);
selecting, by the one or more processors (306), from a plurality of rows of an orthogonal matrix, a row corresponding to a basic service set, BSS, color of a plurality of BSS colors;
encoding, by the one or more processors (306), into a first symbol of the preamble, a sequence of values from a first set of columns of the row;
inserting, by the one or more processors (306), into a second symbol of the preamble, a second sequence of values from a second set of columns of the row, the second sequence of values comprising a reverse order of the sequence of values encoded in the first symbol; and
transmitting, by the one or more processors (306), to the receiver (304), the preamble with the first symbol and the second symbol to cause the receiver (304) to identify the BSS color of the sender (302) from the plurality of BSS colors.

**12.** The method of claim 11, wherein the orthogonal matrix is a matrix that comprises a plurality of rows and a plurality of columns, wherein an inner product of any two different rows has a result of zero, and wherein the sequence of values within the first symbol includes a first plurality of values of a first portion of a first row of the plurality of rows and the second symbol includes a second plurality of values of a second portion of the first row.

**13.** The method of claim 11 or 12, comprising:
constructing, by the one or more processors (306), the orthogonal matrix from a second orthogonal matrix, the second orthogonal matrix comprising a number of rows that is a half of a number of rows of the orthogonal matrix and a number of columns that is a half of a number of columns of the orthogonal matrix, wherein an inner product of any two different rows of the second orthogonal matrix has a result of zero;
in particular wherein the orthogonal matrix comprises at least 64 rows and 96 columns and the second orthogonal matrix comprises at least 32 rows and 48 columns.

**14.** The method of any of claims 11 to 13, comprising at least one of the following features:

I: wherein the sequence of values corresponds to a first half of the row and the second sequence corresponds to a second half of the row and wherein the sequence and the second sequence are configured to indicate, for the receiver (304), the BSS color of the sender (302);
II: comprising:

mapping, by the one or more processors (306), using the sequence of values of the first set of columns, 48 data tones indicative of the BSS to be indicated by the first symbol;
mapping, by the one or more processors (306), using the second sequence of values for the second set of columns, a second 48 tones indicative of the BSS to be indicated by the second symbol, wherein the second 48 tones comprise tones that are in reverse order of tones of the 48 tones;
inserting, by the one or more processors (306), into the first symbol, four pilot tones along with the 48 data tones; and
inserting, by the one or more processors (306), into the second symbol, a second four pilot tones along with the second 48 data tones.

**15.** A non-transient computer readable medium comprising processor readable instructions which, when executed by one or more processors (306), cause the one or more processors (306) to:

generate a preamble for a physical layer protocol data unit, PPDU, frame of an enhanced long-range, ELR, format to be wirelessly transmitted to a receiver (304);
select, from a plurality of rows of an orthogonal matrix, a row corresponding to a basic service set, BSS, color of a plurality of BSS colors;
encode into a first symbol of the preamble, a sequence of values from a first set of columns of the row;
insert into a second symbol of the preamble, a second sequence of values from a second set of columns of the row, the second sequence of values comprising a reverse order of the sequence of values encoded in the first symbol; and
transmit, to the receiver (304), the preamble with the first symbol and the second symbol to cause the receiver (304) to identify the BSS color of the sender (302) from the plurality of BSS colors.

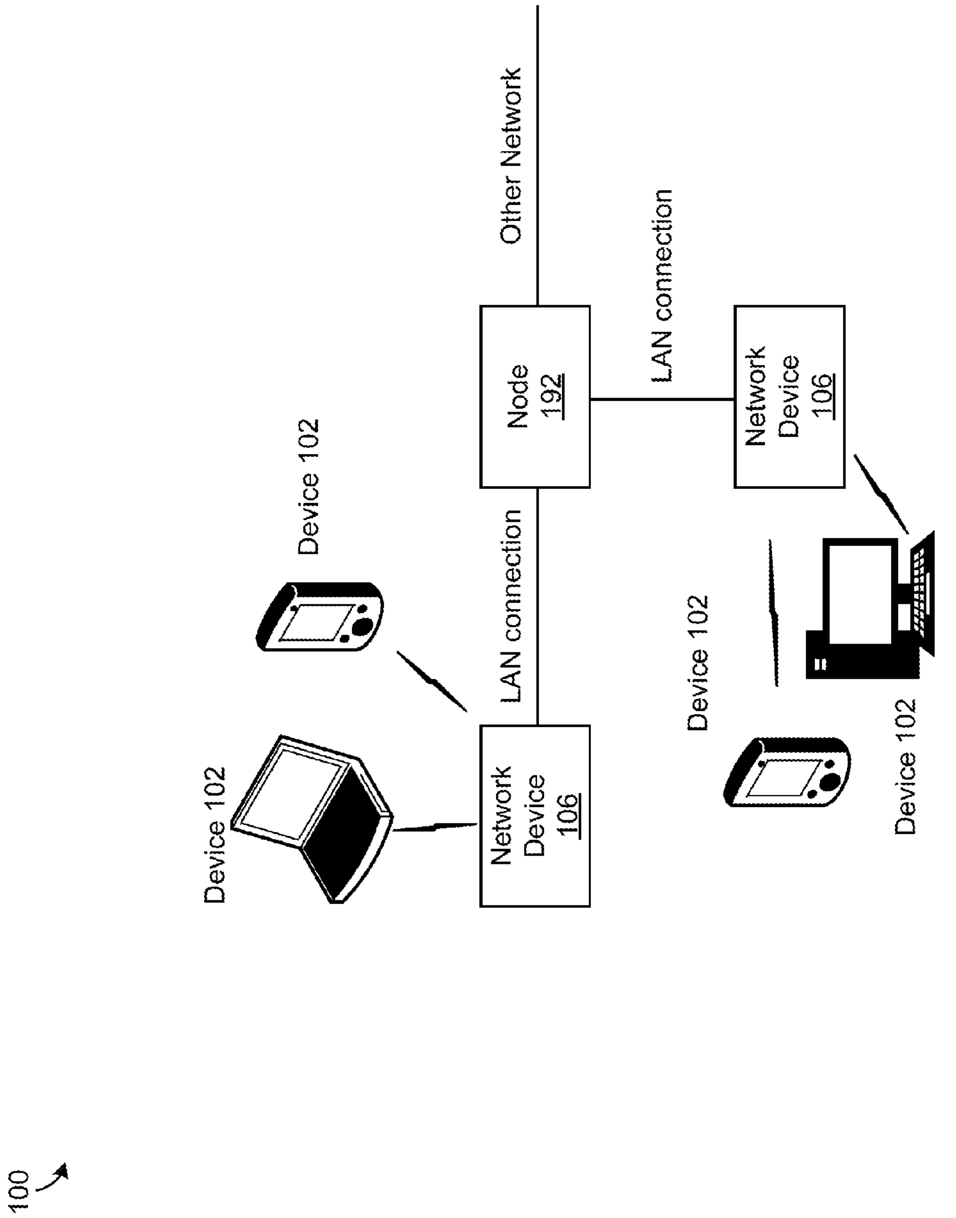
100
Other Network
Node 192
LAN connection
LAN connection
Network Device 106
Network Device 106
Device 102
Device 102
Device 102
Device 102
Device 102

FIG. 1A

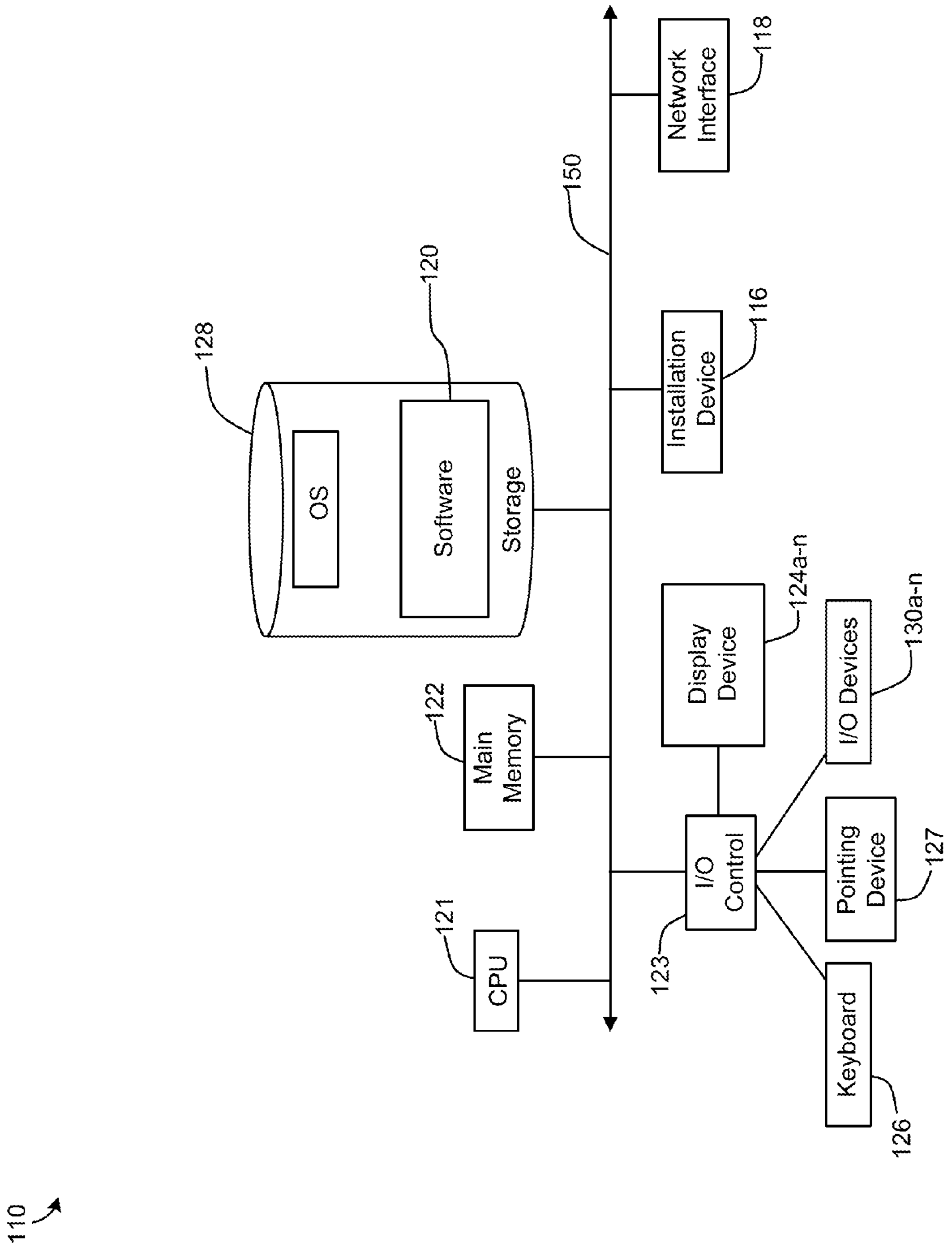
110
128
OS
Software
Storage
120
CPU
121
Main Memory
122
150
Network Interface
118
Installation Device
116
Display Device
124a-n
I/O Control
123
Keyboard
126
Pointing Device
127
I/O Devices
130a-n

FIG. 1B

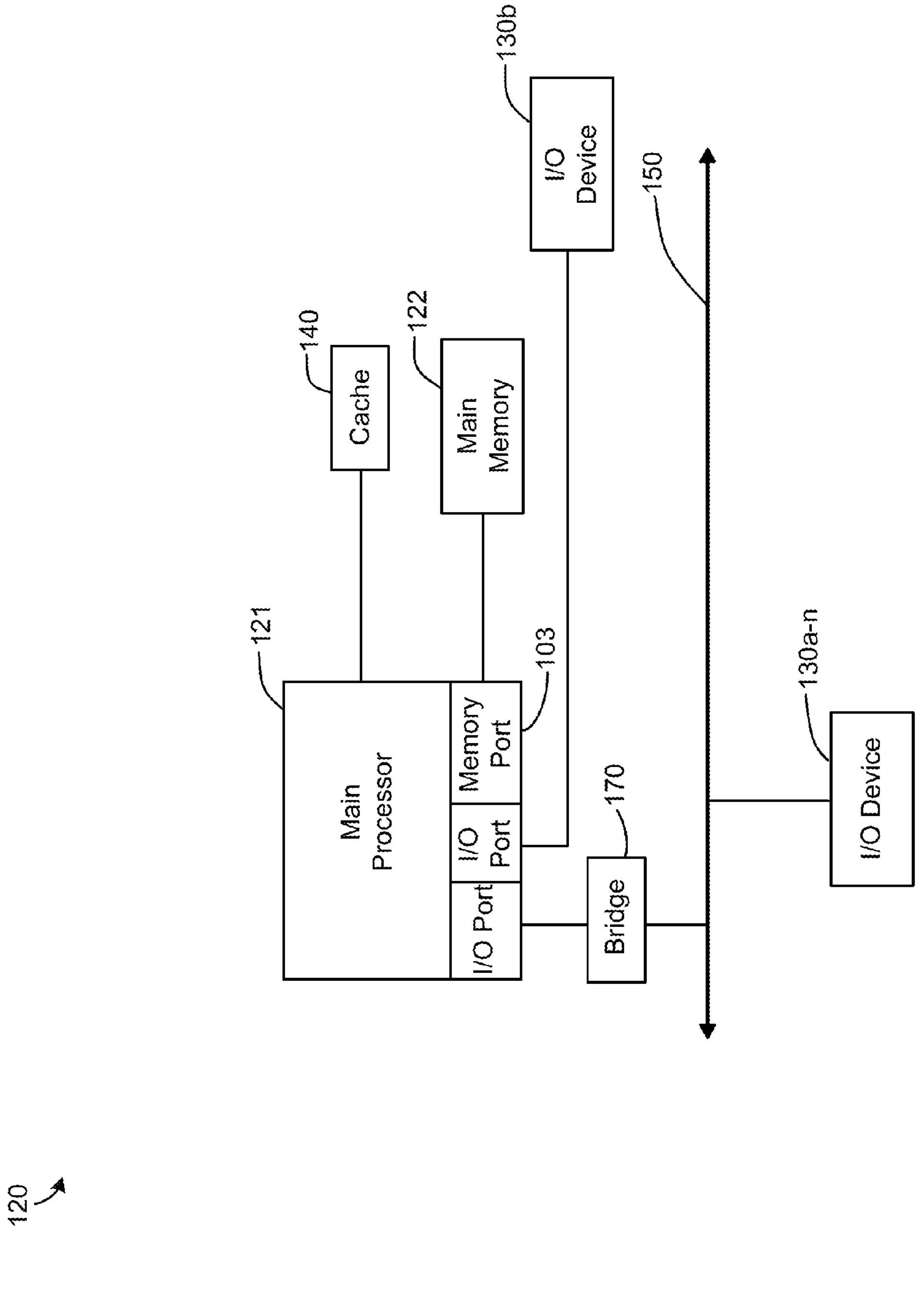
120
121
Main Processor
Memory Port
I/O Port
I/O Port
103
140
Cache
122
Main Memory
130b
I/O Device
150
170
Bridge
130a-n
I/O Device

FIG. 1C

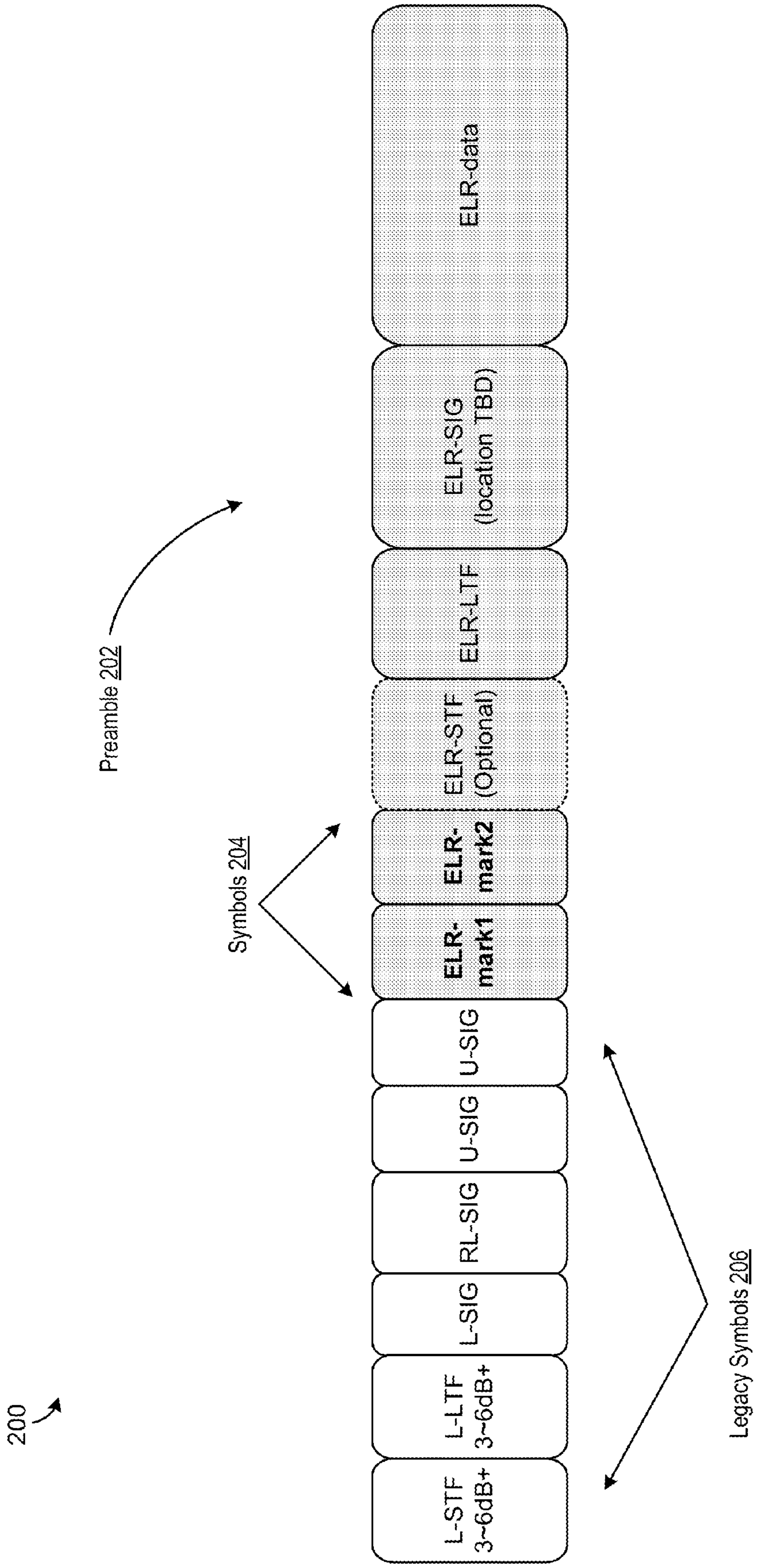
200
Preamble 202
Symbols 204
Legacy Symbols 206
L-STF 3~6dB+
L-LTF 3~6dB+
L-SIG
RL-SIG
U-SIG
U-SIG
ELR-mark1
ELR-mark2
ELR-STF (Optional)
ELR-LTF
ELR-SIG (location TBD)
ELR-data

FIG. 2

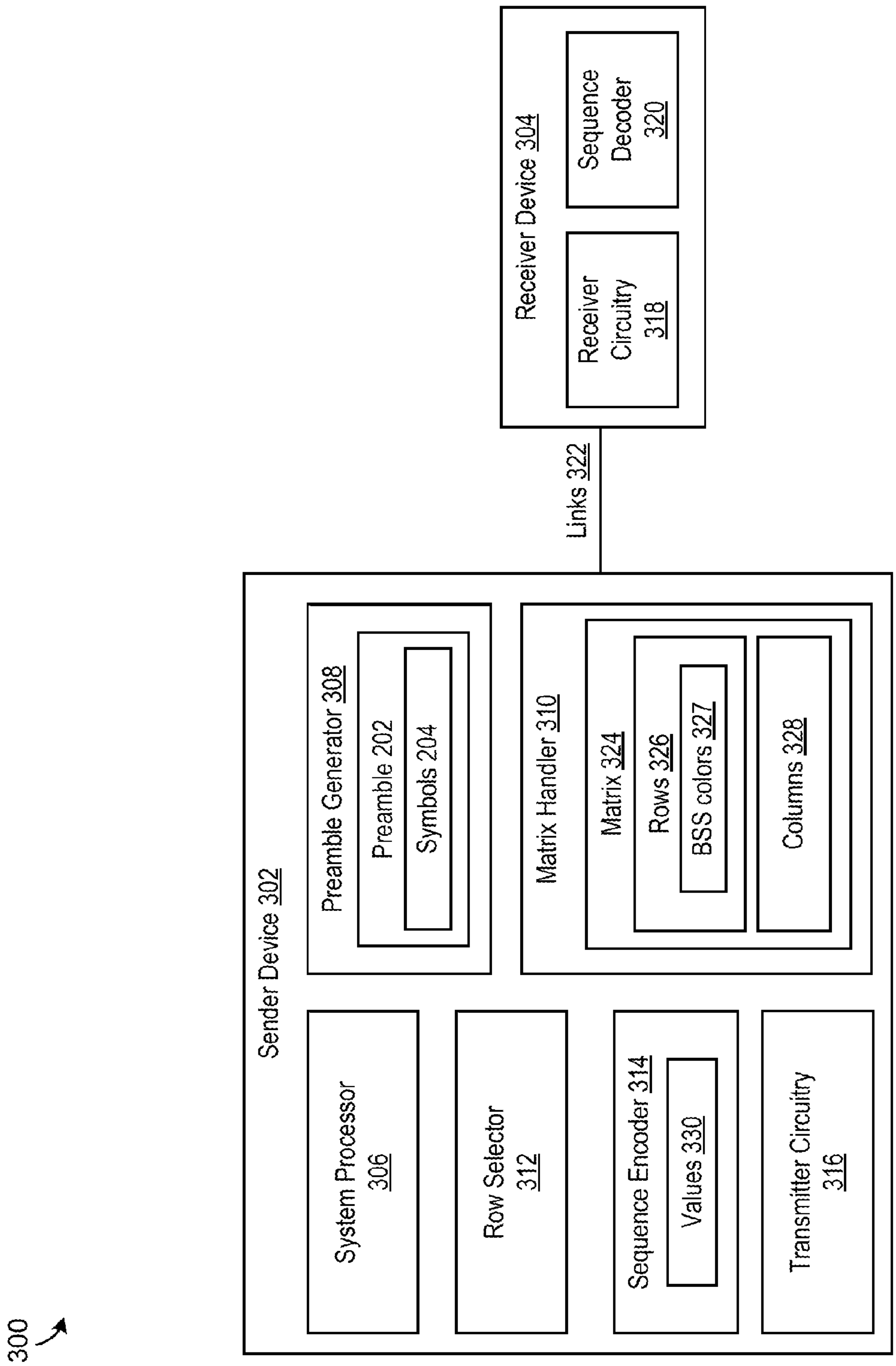
300
Sender Device 302
System Processor 306
Row Selector 312
Sequence Encoder 314
Values 330
Transmitter Circuitry 316
Preamble Generator 308
Preamble 202
Symbols 204
Matrix Handler 310
Matrix 324
Rows 326
BSS colors 327
Columns 328
Links 322
Receiver Device 304
Receiver Circuitry 318
Sequence Decoder 320

FIG. 3

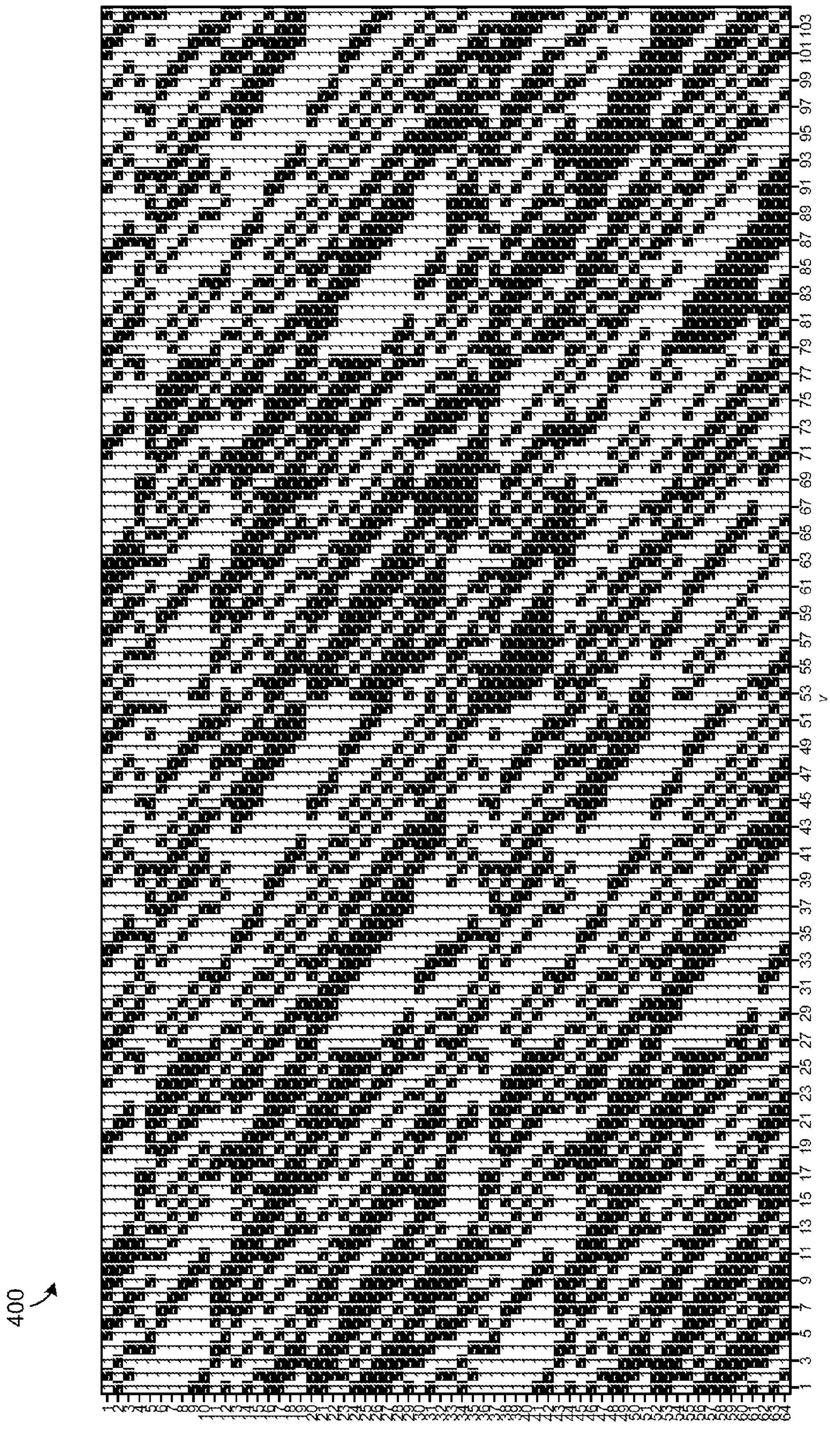

FIG. 4A

410

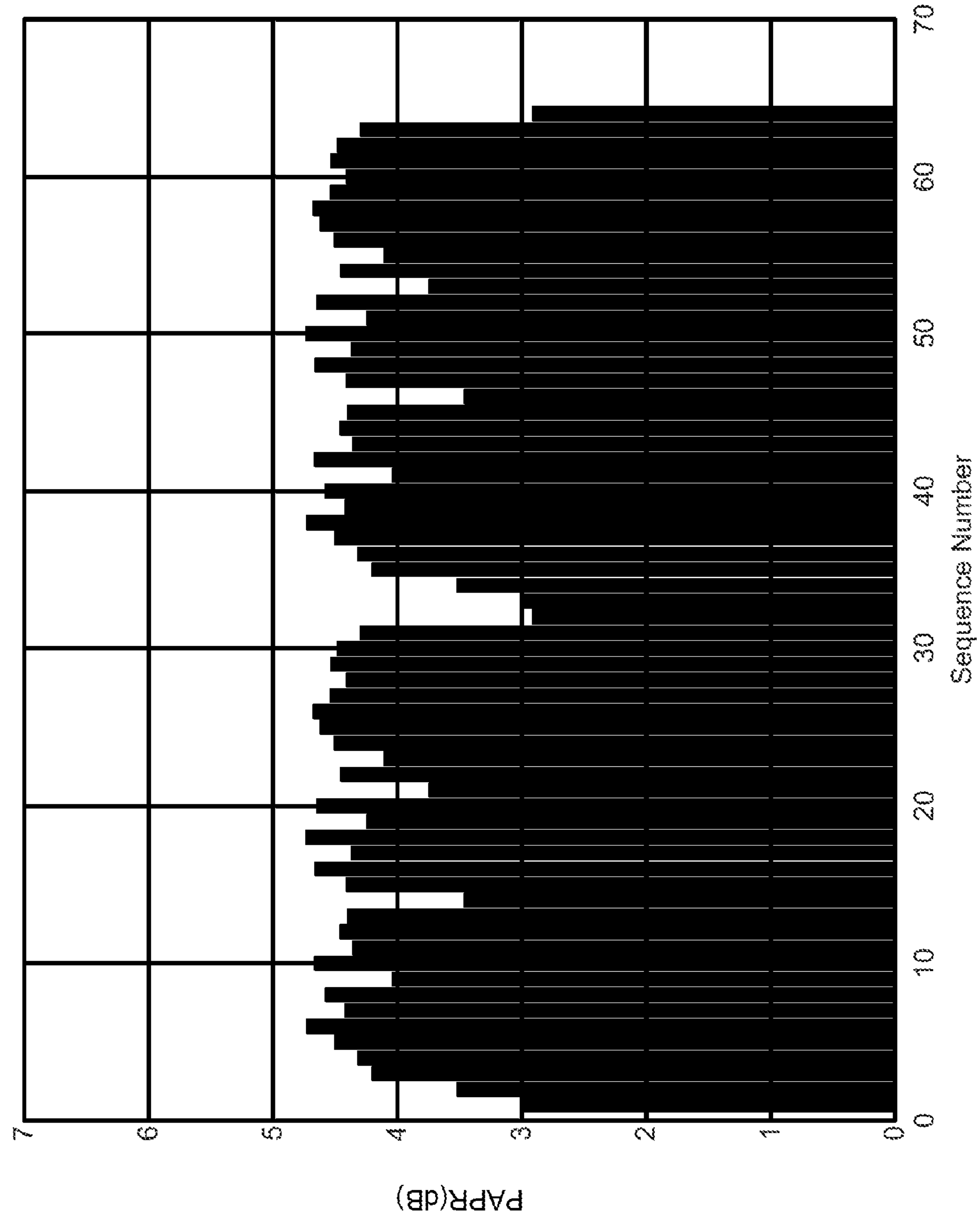


FIG. 4B

420

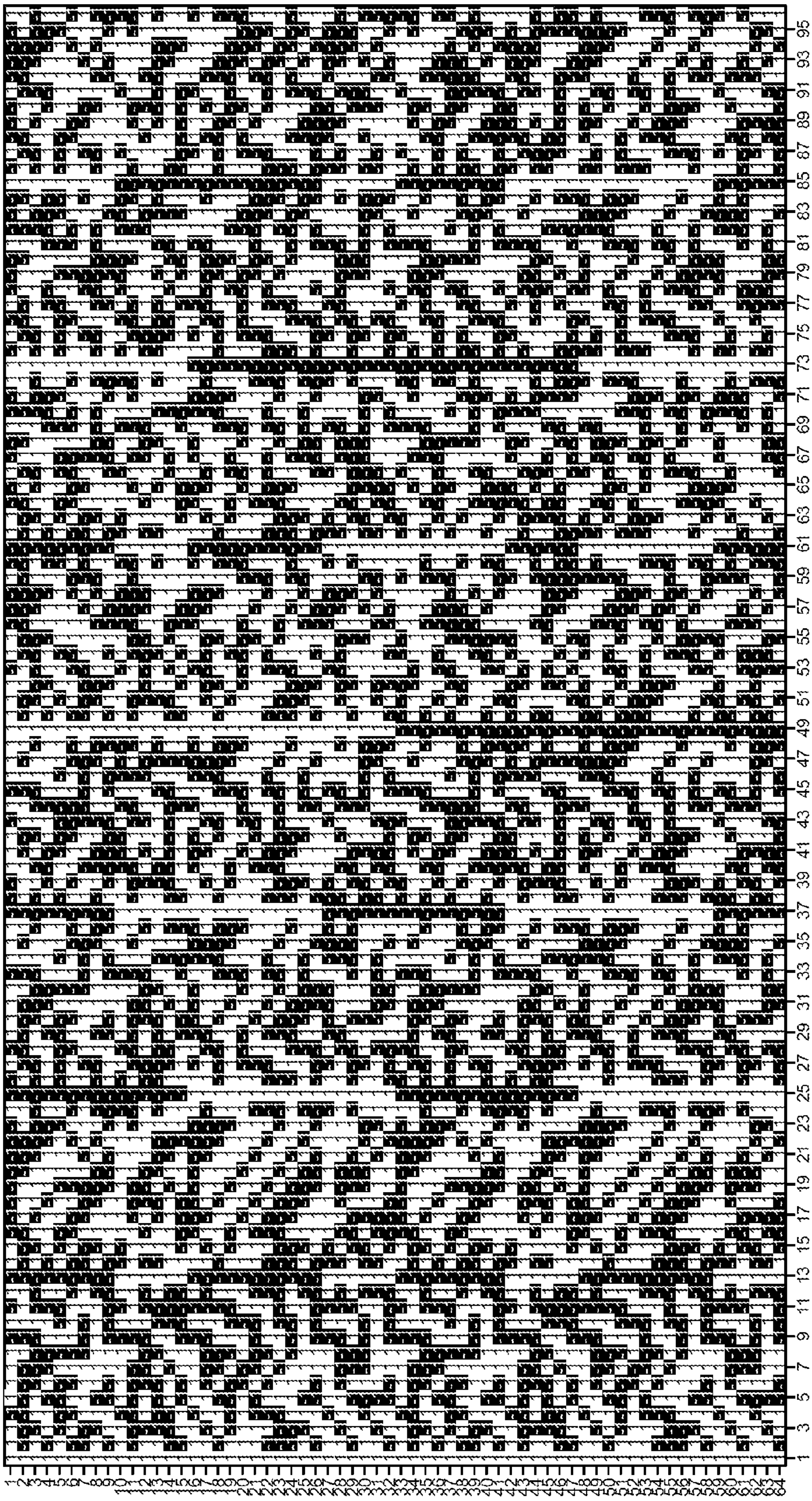

FIG. 4C

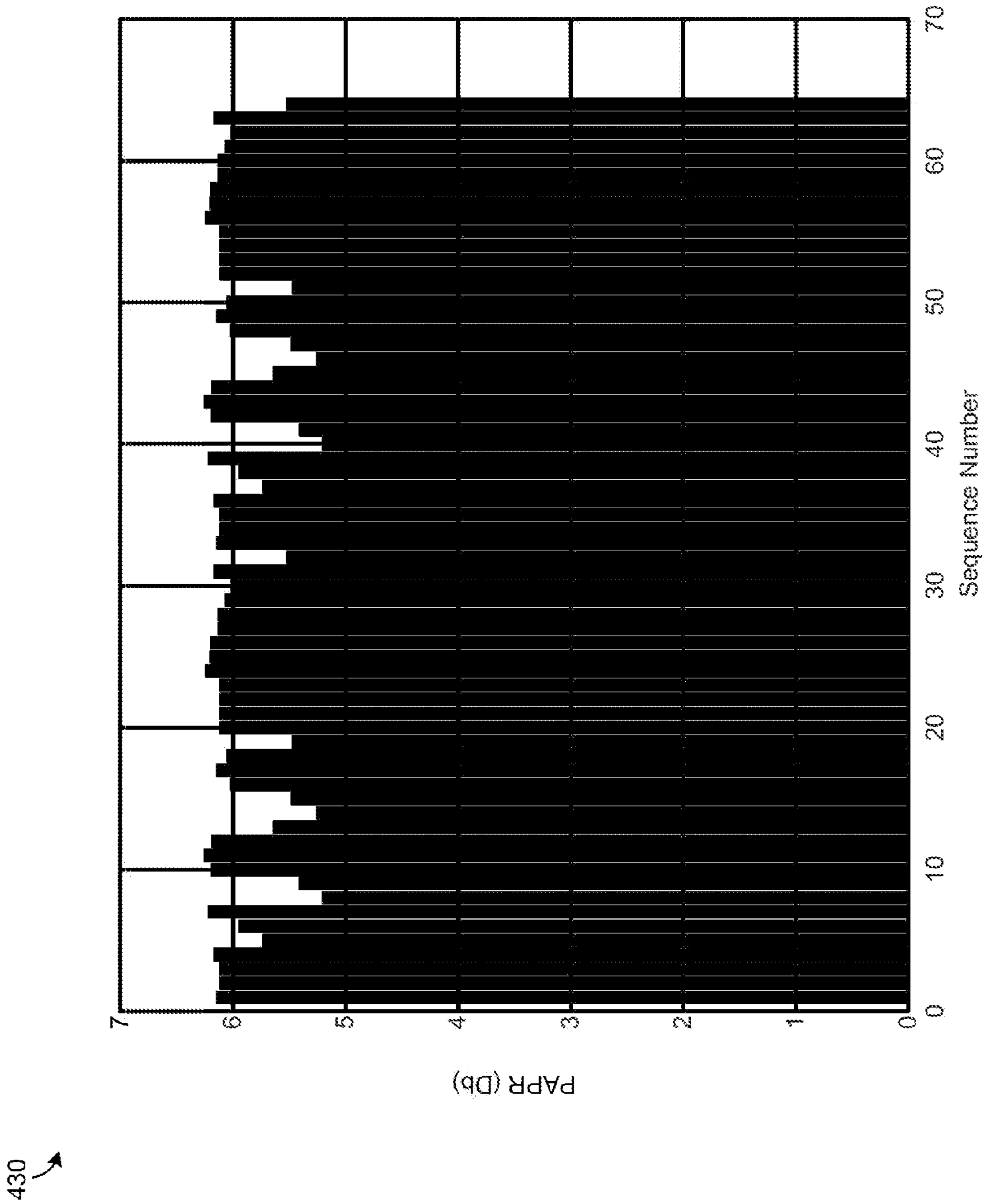


FIG. 4D

440

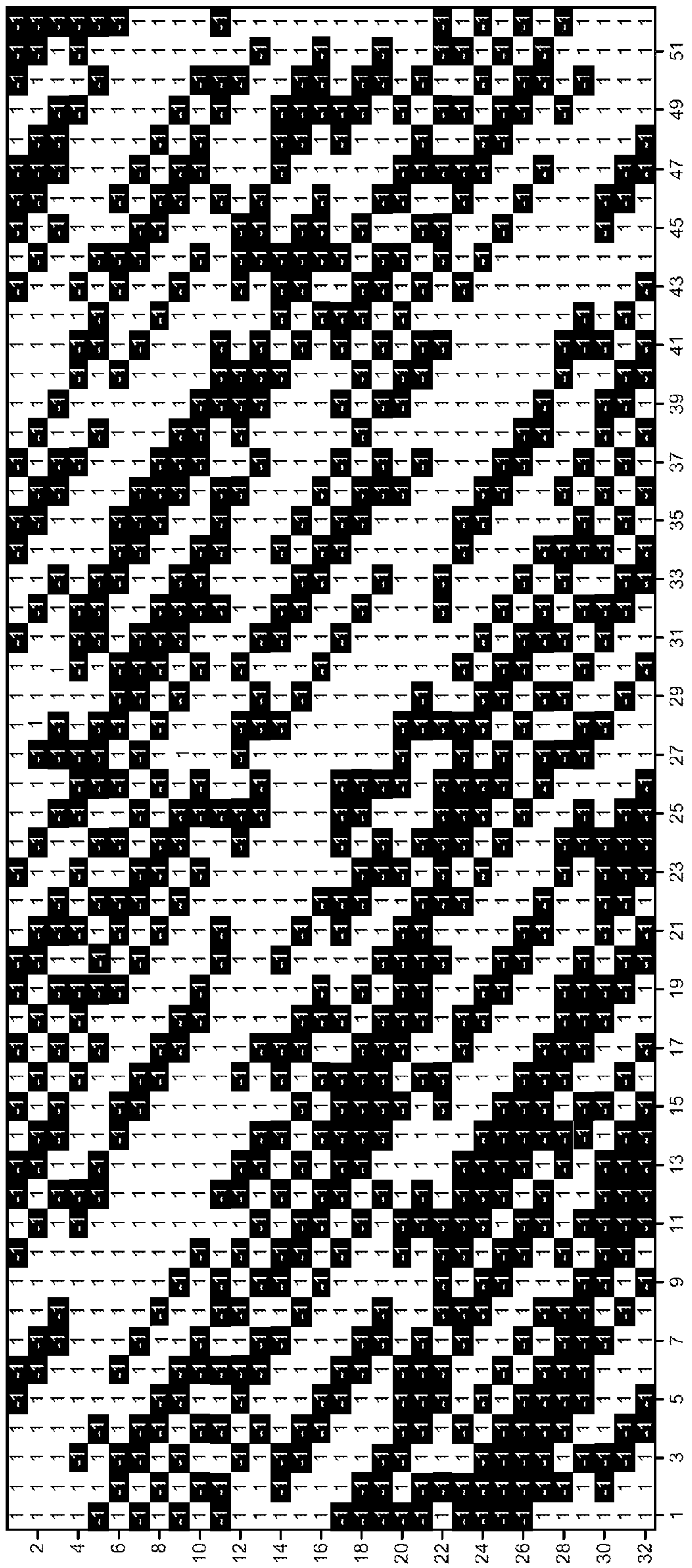

FIG. 4E

450

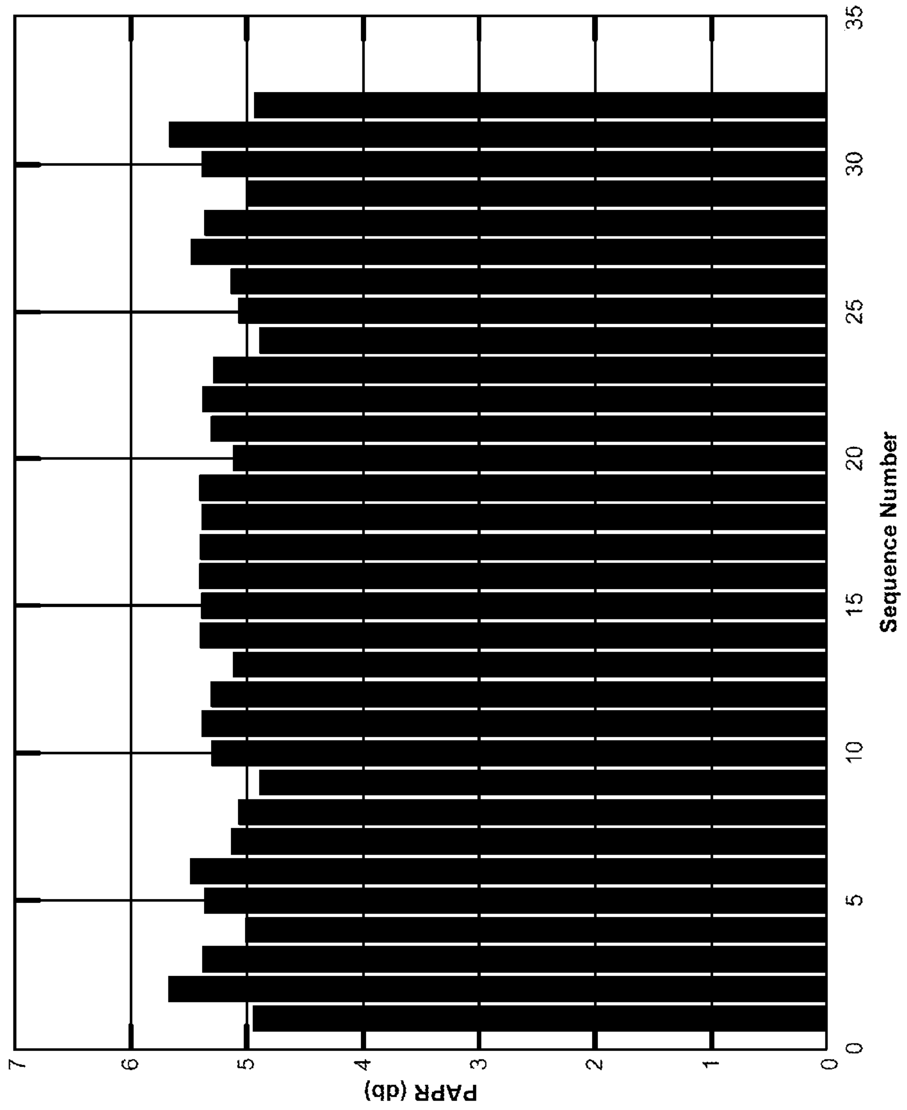


FIG. 4F

460

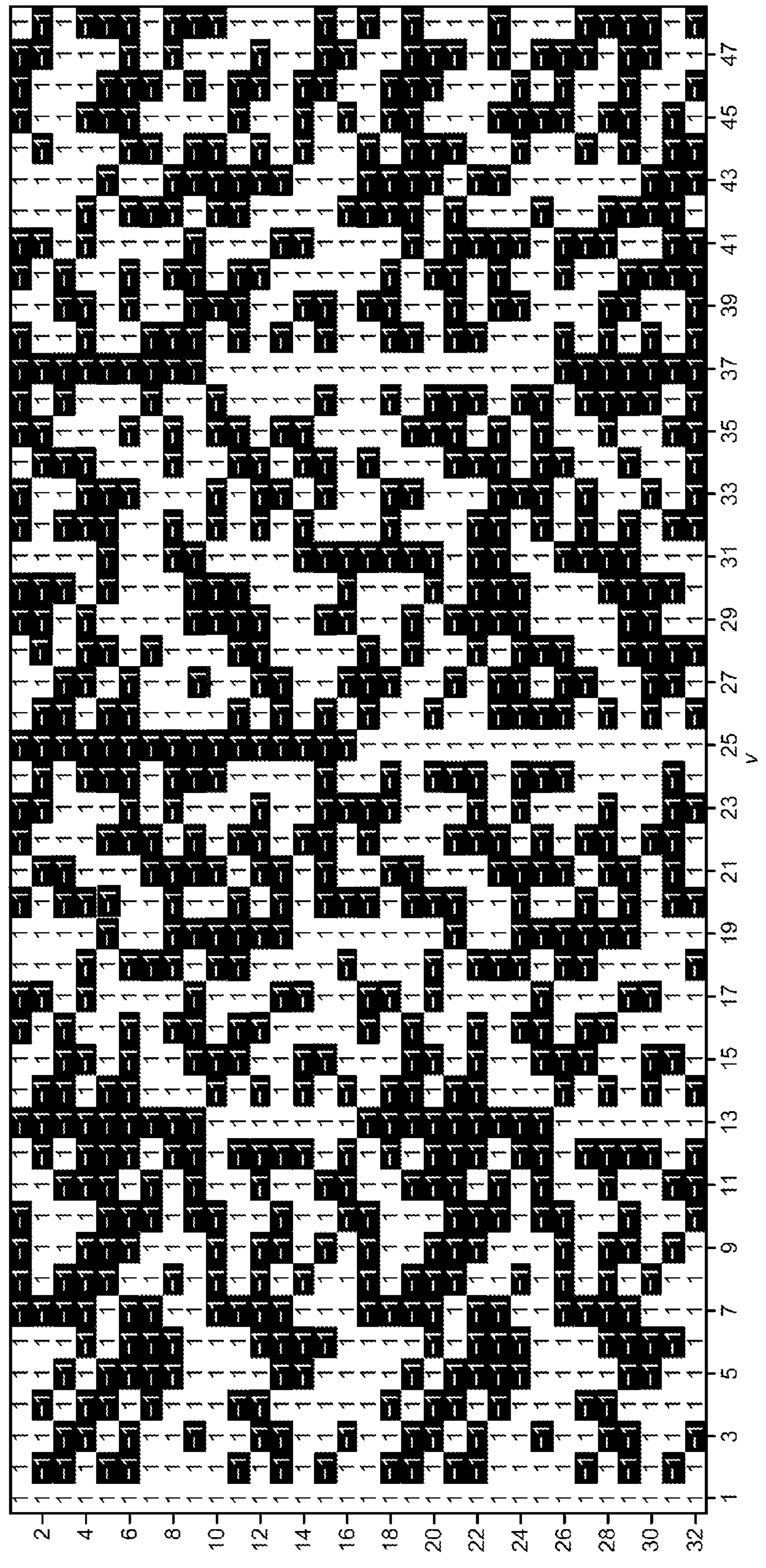

FIG. 4G

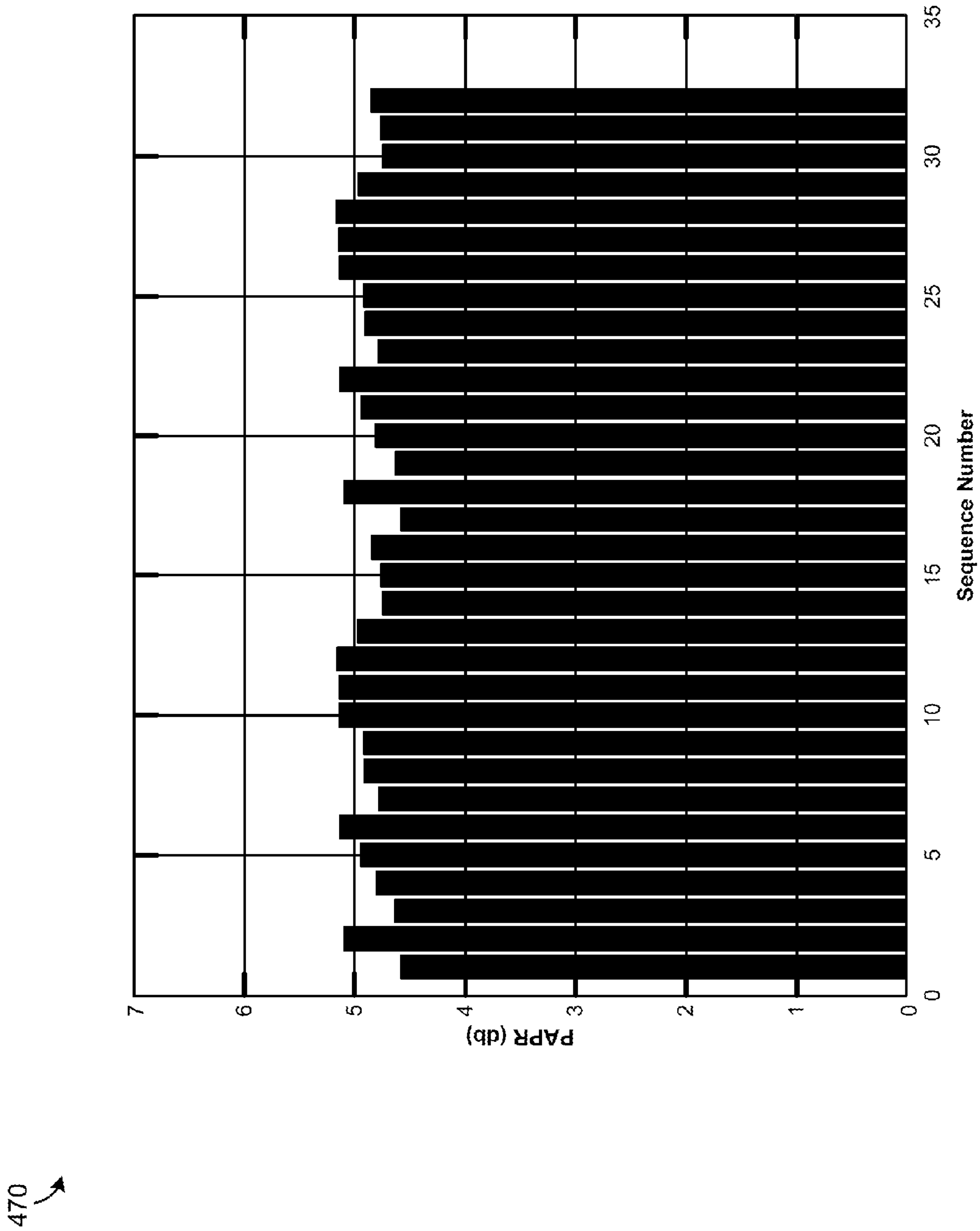


FIG. 4H

500

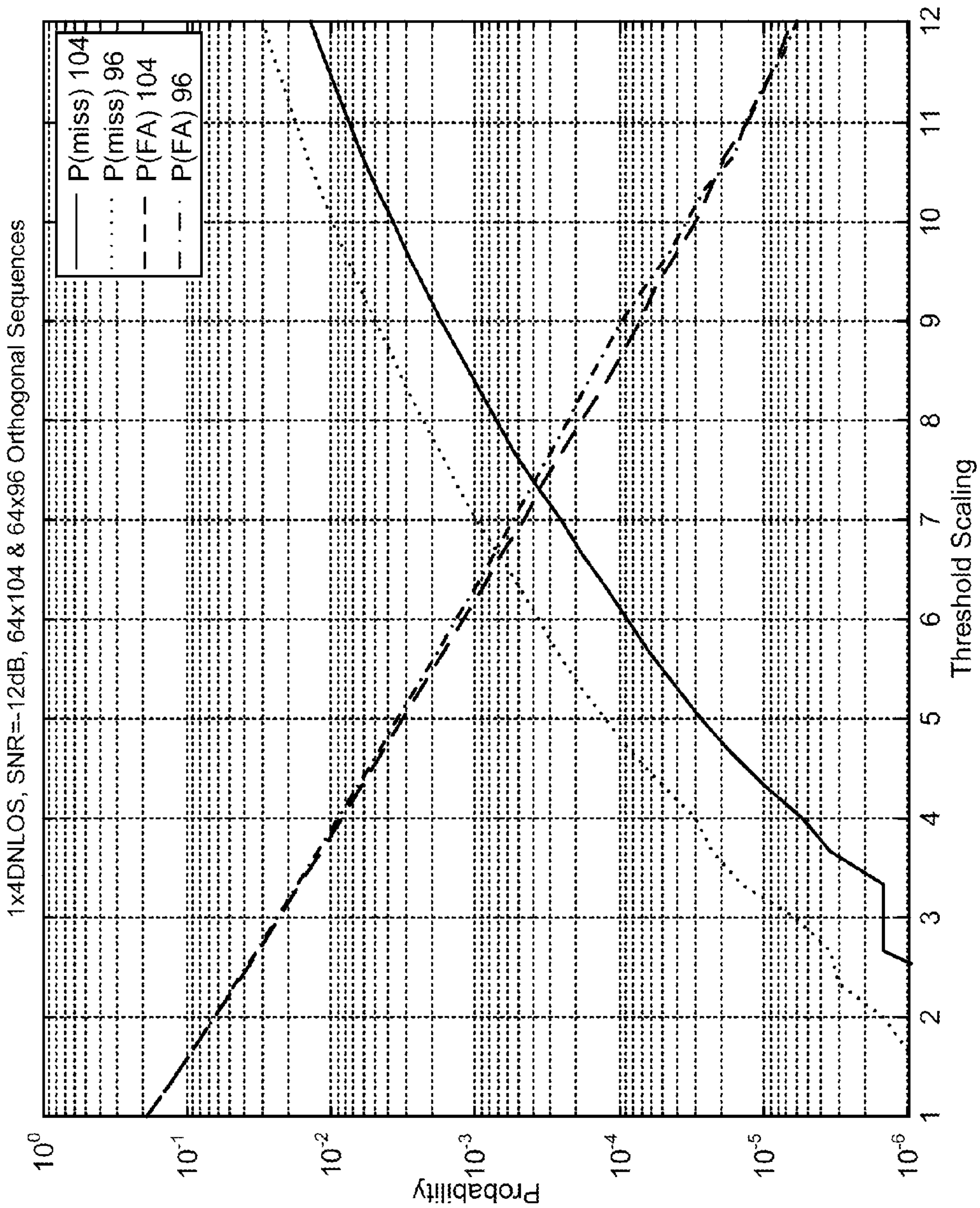
1x4DNLOS, SNR=-12dB, 64x104 & 64x96 Orthogonal Sequences
P(miss) 104
P(miss) 96
P(FA) 104
P(FA) 96
Probability
$10^0$
$10^{-1}$
$10^{-2}$
$10^{-3}$
$10^{-4}$
$10^{-5}$
$10^{-6}$
Threshold Scaling
1
2
3
4
5
6
7
8
9
10
11
12

FIG. 5A

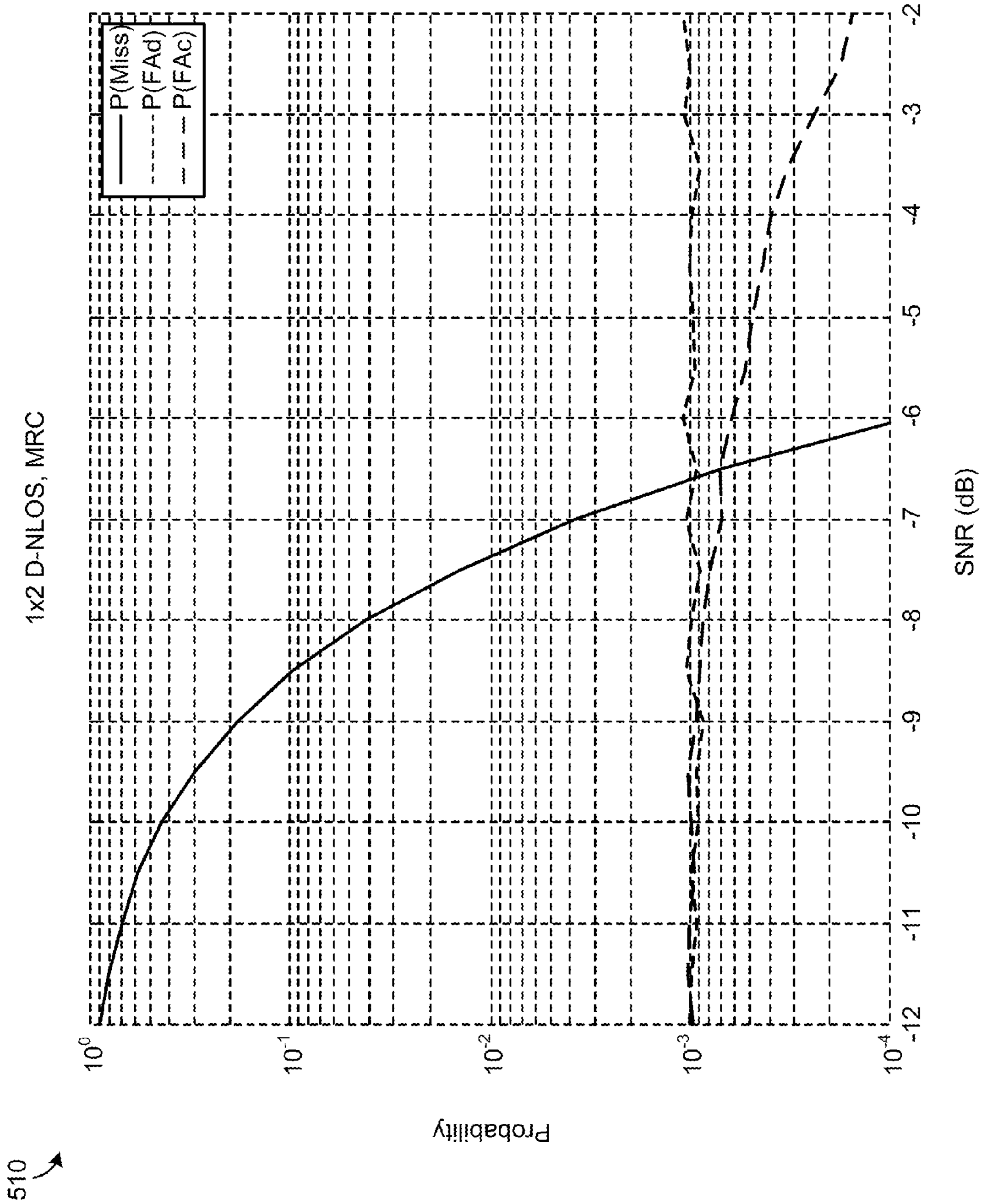
1x2 D-NLOS, MRC
P(Miss)
P(FAd)
P(FAc)
Probability
SNR (dB)
510
$10^0$
$10^{-1}$
$10^{-2}$
$10^{-3}$
$10^{-4}$
-12
-11
-10
-9
-8
-7
-6
-5
-4
-3
-2

FIG. 5B

600

| | |
|---|---|
| B21FCE973D7B2B21FCE973D7B2 | B21FCE973D7B24DE03168C284D |
| 590FE74B9EBD9590FE74B9EBD9 | 590FE74B9EBD9A6F018B461426 |
| AC87F3A5CF5ECAC87F3A5CF5EC | AC87F3A5CF5EC53780C5A30A13 |
| EAC87F325CF5EEAC87F325CF5E | EAC87F325CF5E153780CDA30A1 |
| E75643FD92E7AE75643FD92E7A | E75643FD92E7A18A9BC026D185 |
| F9D590EF64B9EF9D590EF64B9E | F9D590EF64B9E062A6F109B461 |
| FCEAC857B25CFFCEAC857B25CF | FCEAC857B25CF031537A84DA30 |
| FE75642BD92E7FE75642BD92E7 | FE75642BD92E7018A9BD426D18 |
| 7F3AB235EC9737F3AB235EC973 | 7F3AB235EC97380C54DCA1368C |
| 3F9D593AF64B93F9D593AF64B9 | 3F9D593AF64B9C062A6C509B46 |
| C87F3A9CF5EC9C87F3A9CF5EC9 | C87F3A9CF5EC93780C5630A136 |
| 643F9D6E7AF64643F9D6E7AF64 | 643F9D6E7AF649BC062918509B |
| D90A18AB9FC26D90A18AB9FC26 | D90A18AB9FC2626F5E754603D9 |
| 6C850C55CFE136C850C55CFE13 | 6C850C55CFE13937AF3AA301EC |
| B642862AE7F09B642862AE7F09 | B642862AE7F0949BD79D5180F6 |
| 2D90A19AB9FC22D90A19AB9FC2 | 2D90A19AB9FC2D26F5E654603D |
| 16C850CD5CFE116C850CD5CFE1 | 16C850CD5CFE1E937AF32A301E |
| 8B642866AE7F08B642866AE7F0 | 8B642866AE7F0749BD7995180F |
| C5B21413573F8C5B21413573F8 | C5B21413573F83A4DEBECA8C07 |
| 18B642826AE7F18B642826AE7F | 18B642826AE7FE749BD7D95180 |
| 0C5B21613573F0C5B21613573F | 0C5B21613573FF3A4DE9ECA8C0 |
| 862D90B09AB9F862D90B09AB9F | 862D90B09AB9F79D26F4F65460 |
| A18B643C26AE7A18B643C26AE7 | A18B643C26AE75E749BC3D9518 |
| 50C5B23E1357350C5B23E13573 | 50C5B23E13573AF3A4DC1ECA8C |
| 2862D93F09AB92862D93F09AB9 | 2862D93F09AB9D79D26C0F6546 |
| 14316CBF84D5C14316CBF84D5C | 14316CBF84D5CEBCE93407B2A3 |
| 0A18B65FC26AE0A18B65FC26AE | 0A18B65FC26AEF5E749A03D951 |
| 850C5B0FE1357850C5B0FE1357 | 850C5B0FE13577AF3A4F01ECA8 |
| 42862DA7F09AB42862DA7F09AB | 42862DA7F09ABBD79D2580F654 |
| C850C59CFE135C850C59CFE135 | C850C59CFE13537AF3A6301ECA |
| 642862EE7F09A642862EE7F09A | 642862EE7F09A9BD79D1180F65 |
| B21431573F84DB21431573F84D | B21431573F84D4DEBCEA8C07B2 |

FIG. 6A

610

| | |
|---|---|
| B21FCE973D7B2B21FCE973D7B2 | B21FCE973D7B24DE03168C284D |
| 590FE74B9EBD9590FE74B9EBD9 | 590FE74B9EBD9A6F018B461426 |
| AC87F3A5CF5ECAC87F3A5CF5EC | AC87F3A5CF5EC53780C5A30A13 |
| EAC87F325CF5EEAC87F325CF5E | EAC87F325CF5E153780CDA30A1 |
| E75643FD92E7AE75643FD92E7A | E75643FD92E7A18A9BC026D185 |
| F9D590EF64B9EF9D590EF64B9E | F9D590EF64B9E062A6F109B461 |
| FCEAC857B25CFFCEAC857B25CF | FCEAC857B25CF031537A84DA30 |
| FE75642BD92E7FE75642BD92E7 | FE75642BD92E7018A9BD426D18 |
| 7F3AB235EC9737F3AB235EC973 | 7F3AB235EC97380C54DCA1368C |
| 3F9D593AF64B93F9D593AF64B9 | 3F9D593AF64B9C062A6C509B46 |
| C87F3A9CF5EC9C87F3A9CF5EC9 | C87F3A9CF5EC93780C5630A136 |
| 643F9D6E7AF64643F9D6E7AF64 | 643F9D6E7AF649BC062918509B |
| D90A18AB9FC26D90A18AB9FC26 | D90A18AB9FC2626F5E754603D9 |
| 6C850C55CFE136C850C55CFE13 | 6C850C55CFE13937AF3AA301EC |
| B642862AE7F09B642862AE7F09 | B642862AE7F0949BD79D5180F6 |
| 2D90A19AB9FC22D90A19AB9FC2 | 2D90A19AB9FC2D26F5E654603D |
| 16C850CD5CFE116C850CD5CFE1 | 16C850CD5CFE1E937AF32A301E |
| 8B642866AE7F08B642866AE7F0 | 8B642866AE7F0749BD7995180F |
| C5B21413573F8C5B21413573F8 | C5B21413573F83A4DEBECA8C07 |
| 18B642826AE7F18B642826AE7F | 18B642826AE7FE749BD7D95180 |
| 0C5B21613573F0C5B21613573F | 0C5B21613573FF3A4DE9ECA8C0 |
| 862D90B09AB9F862D90B09AB9F | 862D90B09AB9F79D26F4F65460 |
| A18B643C26AE7A18B643C26AE7 | A18B643C26AE75E749BC3D9518 |
| 50C5B23E1357350C5B23E13573 | 50C5B23E13573AF3A4DC1ECA8C |
| 2862D93F09AB92862D93F09AB9 | 2862D93F09AB9D79D26C0F6546 |
| 14316CBF84D5C14316CBF84D5C | 14316CBF84D5CEBCE93407B2A3 |
| 0A18B65FC26AE0A18B65FC26AE | 0A18B65FC26AEF5E749A03D951 |
| 850C5B0FE1357850C5B0FE1357 | 850C5B0FE13577AF3A4F01ECA8 |
| 42862DA7F09AB42862DA7F09AB | 42862DA7F09ABBD79D2580F654 |
| C850C59CFE135C850C59CFE135 | C850C59CFE13537AF3A6301ECA |
| 642862EE7F09A642862EE7F09A | 642862EE7F09A9BD79D1180F65 |
| B21431573F84DB21431573F84D | B21431573F84D4DEBCEA8C07B2 |

FIG. 6B

620

F3A54DFD97D18
F9D2A6DECBE8C
FCE9534F65F46
DFCE9518F65F4
6FE74A8C7B2FA
9BF9D2A31ECBE
4DFCE9518F65F
A6FE74A8C7B2F
537F3A7463D97
A9BF9D3A31ECB
2A6FE77E8C7B2
D2A6FE4BE8C7B
E9537F25F463D
9D2A6FECBE8C7
CE9537F65F463
E74A9BFB2FA31
73A0B23D952E7
39D0593ECA973
1CE82CBF654B9
439D058FECA97
21CE82E7F654B
B21CE82E7F654
2C873A0B9FD95
16439D25CFECA
0B21CE92E7F65
0590E76973FB2
82C87394B9FD9
A0B21CD52E7F6
D0590E4A973FB
9D0590ECA973F
CE82C87654B9F
E741643B2A5CF

FIG. 6C

630

FC3669724271
ADE37423976C
94D0E71AA4FF
C8452E463136
A603CA2877D2
9120B81F54A0
E197B36FE3AB
F2E6847C929C
DF845251F04A
FC3996724D8E
ADEC8B239893
C84AD1463EC9
912F471F5B5F
F2E97B7C9D63
BB5DE03529F8
DF8BAD51FFB5
FC36698DBD8E
ADE374DC6893
94D0E7E55B00
C8452EB9CEC9
A603CAD7882D
9120B8E0AB5F
E197B3901C54
F2E684836D63
DF8452AE0FB5
FC39968DB271
ADEC8BDC676C
C84AD1B9C136
912F47E0A4A0
F2E97B83629C
BB5DE0CAD607
DF8BADAE004A

FIG. 6D

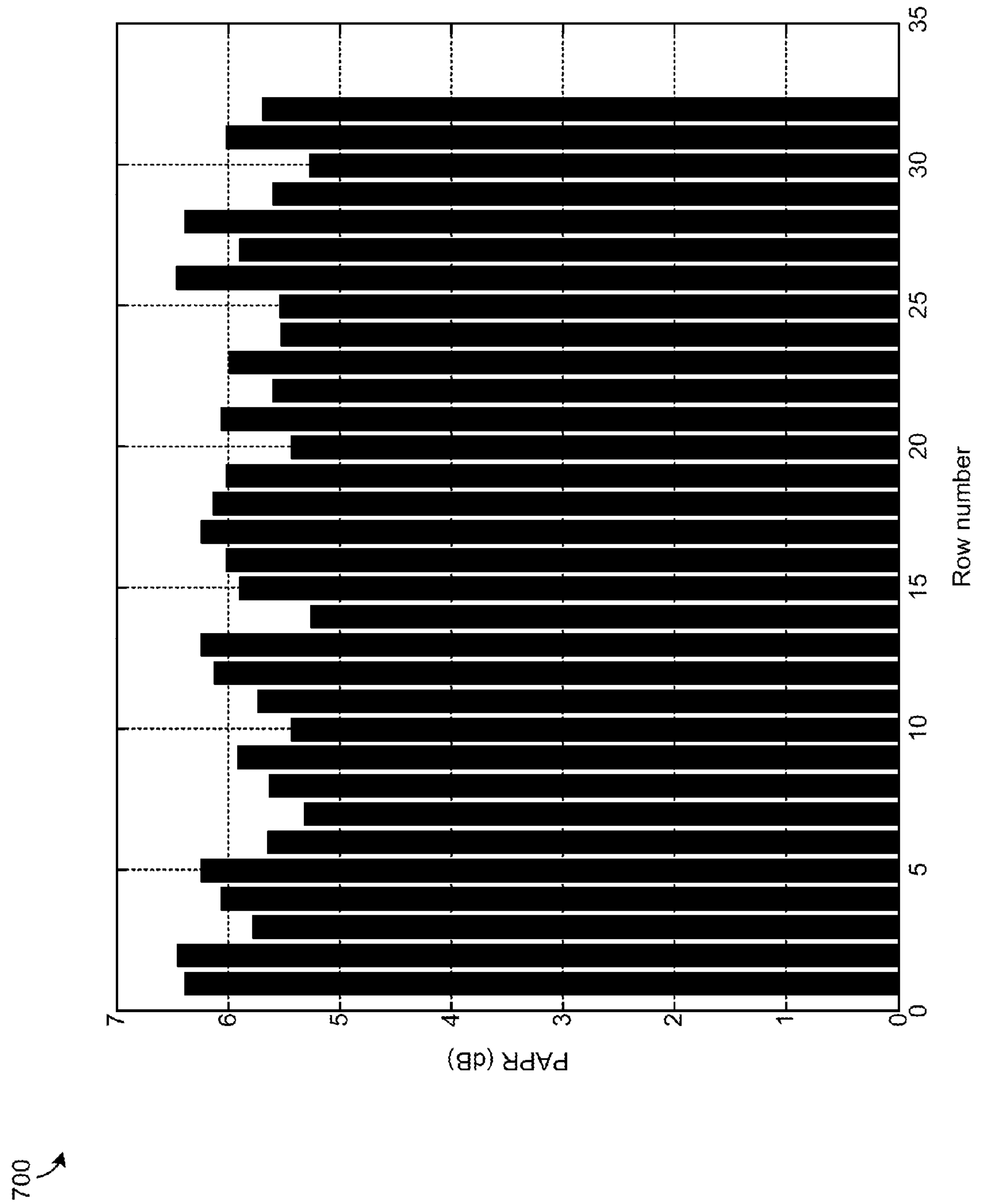


FIG. 7A

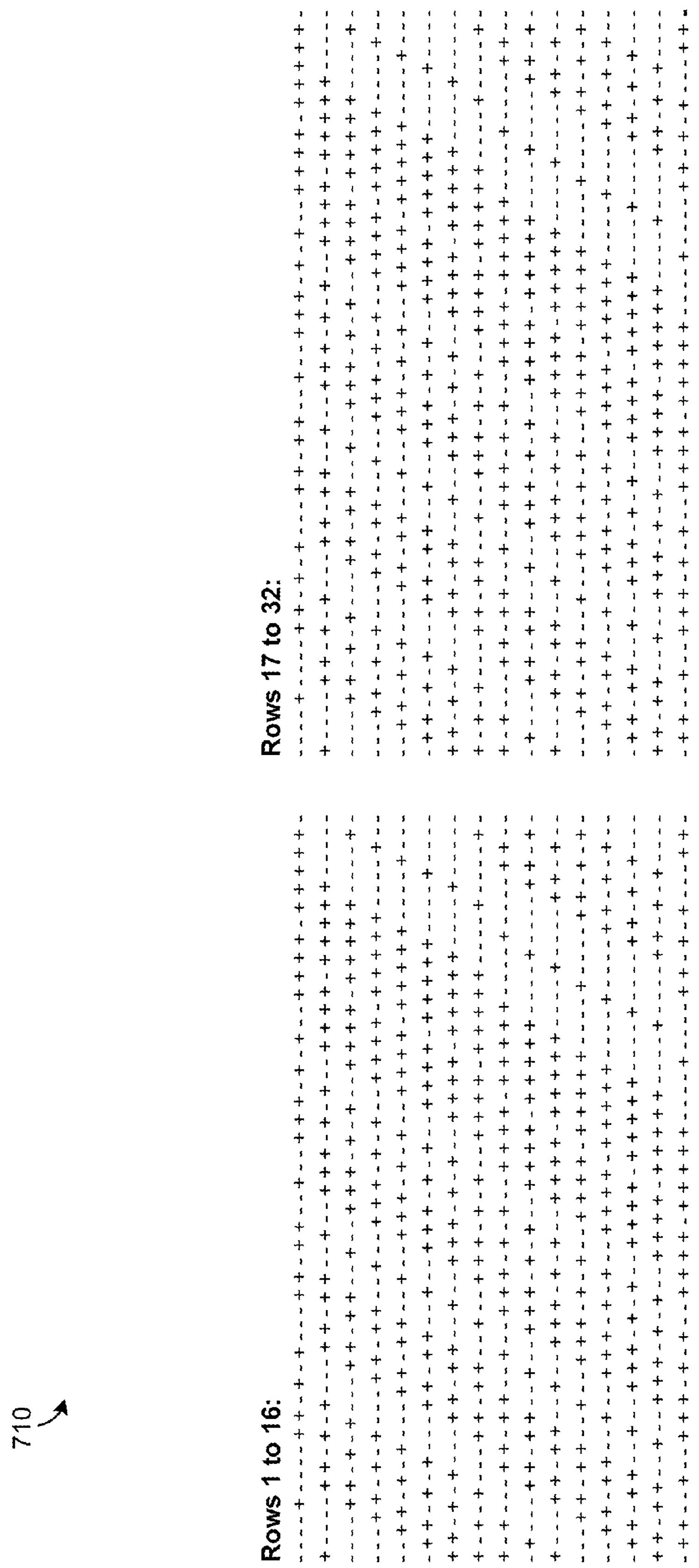


FIG. 7B

720

**Rows 1 to 16:**

086A364EA7BE
86A364EA7BE0
0D46C9D4F7C2
1A8D93A9EF84
351B2753DF08
6A364EA7BE10
D46C9D4F7C20
A8D93A9EF842
A364EA7BE10C
46C9D4F7C21A
8D93A9EF8434
1B2753DF086A
364EA7BE10D4
6C9D4F7C21A8
D93A9EF84350
64EA7BE10D46

**Rows 17 to 32:**

2753DF086A36
4EA7BE10D46C
9D4F7C21A8D8
3A9EF84351B2
753DF086A364
EA7BE10D46C8
D4F7C21A8D92
A9EF84351B26
53DF086A364E
A7BE10D46C9C
3DF086A364EA
7BE10D46C9D4
F7C21A8D93A8
EF84351B2752
BE10D46C9D4E
F84351B2753C

FIG. 7C

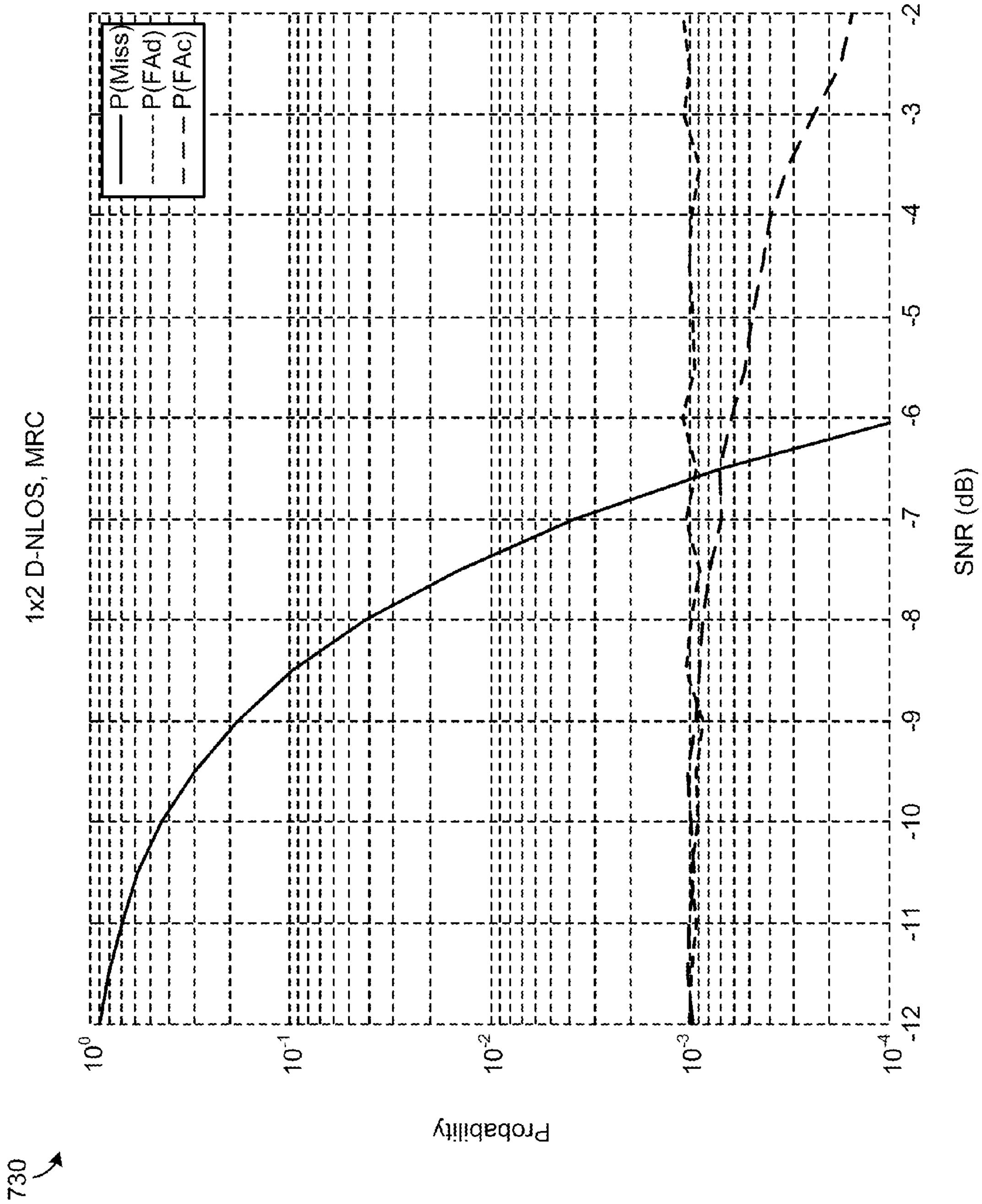
730
1x2 D-NLOS, MRC
P(Miss)
P(FAd)
P(FAc)
Probability
$10^{0}$
$10^{-1}$
$10^{-2}$
$10^{-3}$
$10^{-4}$
-12
-11
-10
-9
-8
-7
-6
-5
-4
-3
-2
SNR (dB)

FIG. 7D

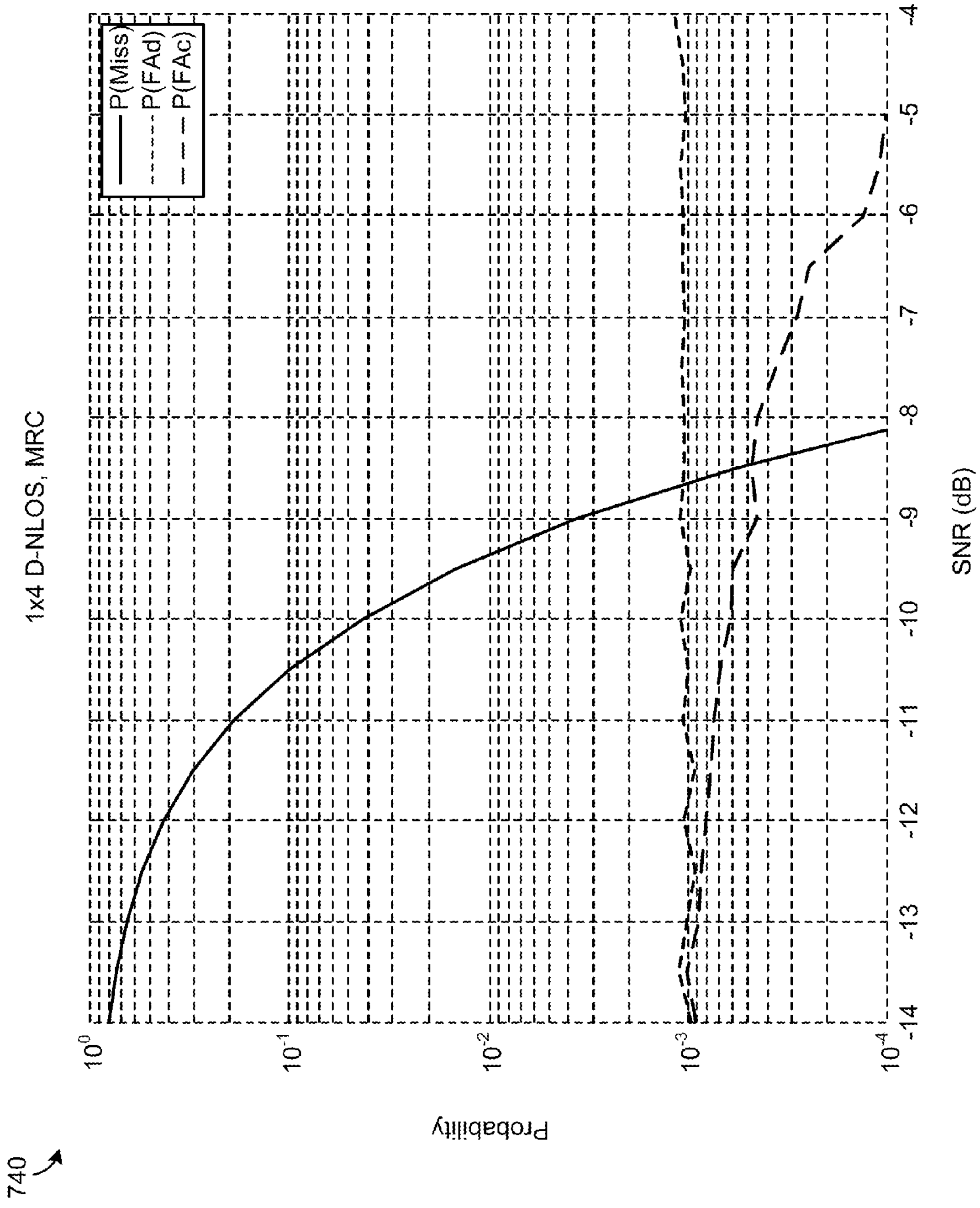
740
1x4 D-NLOS, MRC
Probability
$10^0$
$10^{-1}$
$10^{-2}$
$10^{-3}$
$10^{-4}$
-14
-13
-12
-11
-10
-9
-8
-7
-6
-5
-4
SNR (dB)
P(Miss)
P(FAd)
P(FAc)

FIG. 7E

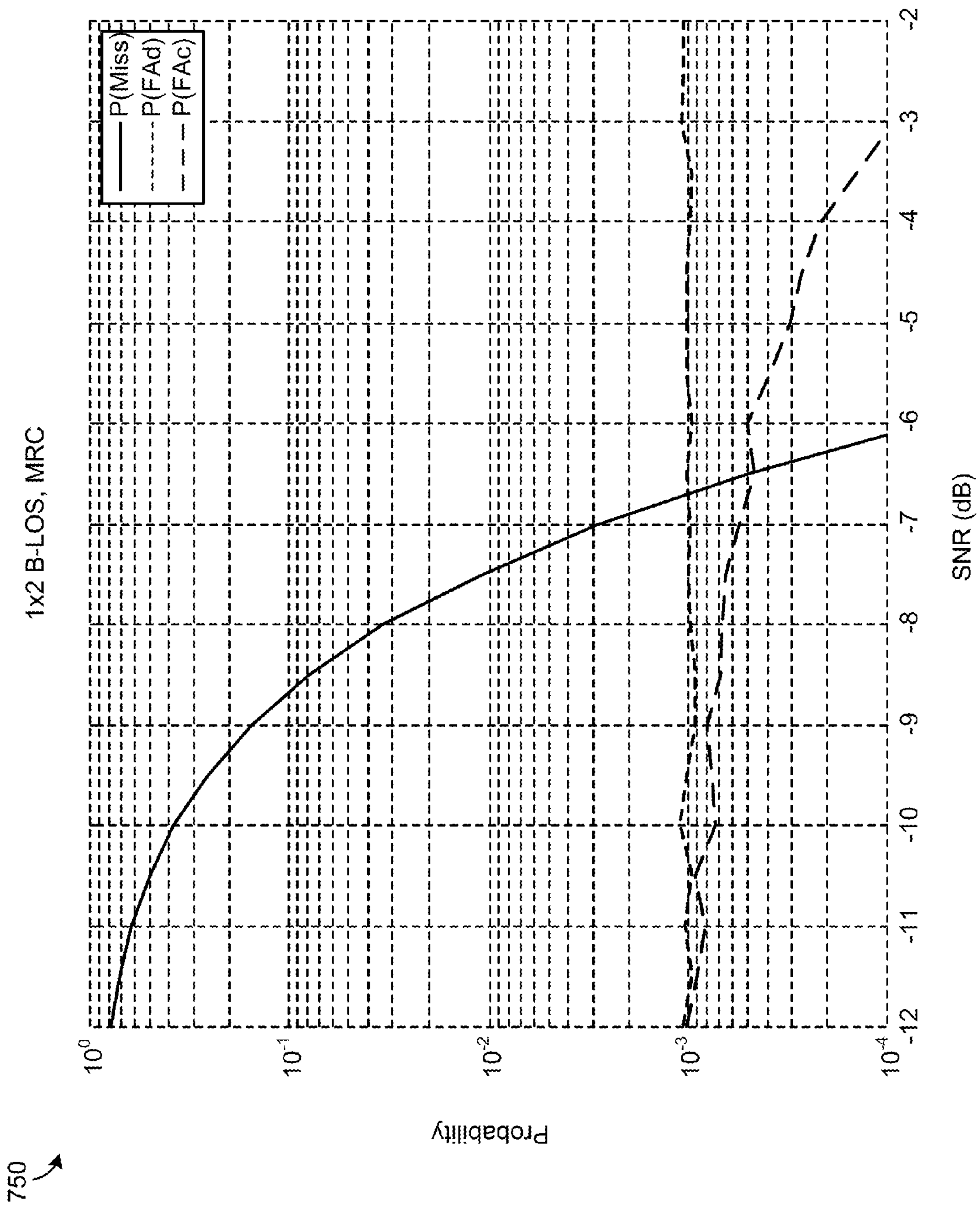
750
1x2 B-LOS, MRC
P(Miss)
P(FAd)
P(FAc)
Probability
$10^0$
$10^{-1}$
$10^{-2}$
$10^{-3}$
$10^{-4}$
-12
-11
-10
-9
-8
-7
-6
-5
-4
-3
-2
SNR (dB)

FIG. 7F

760

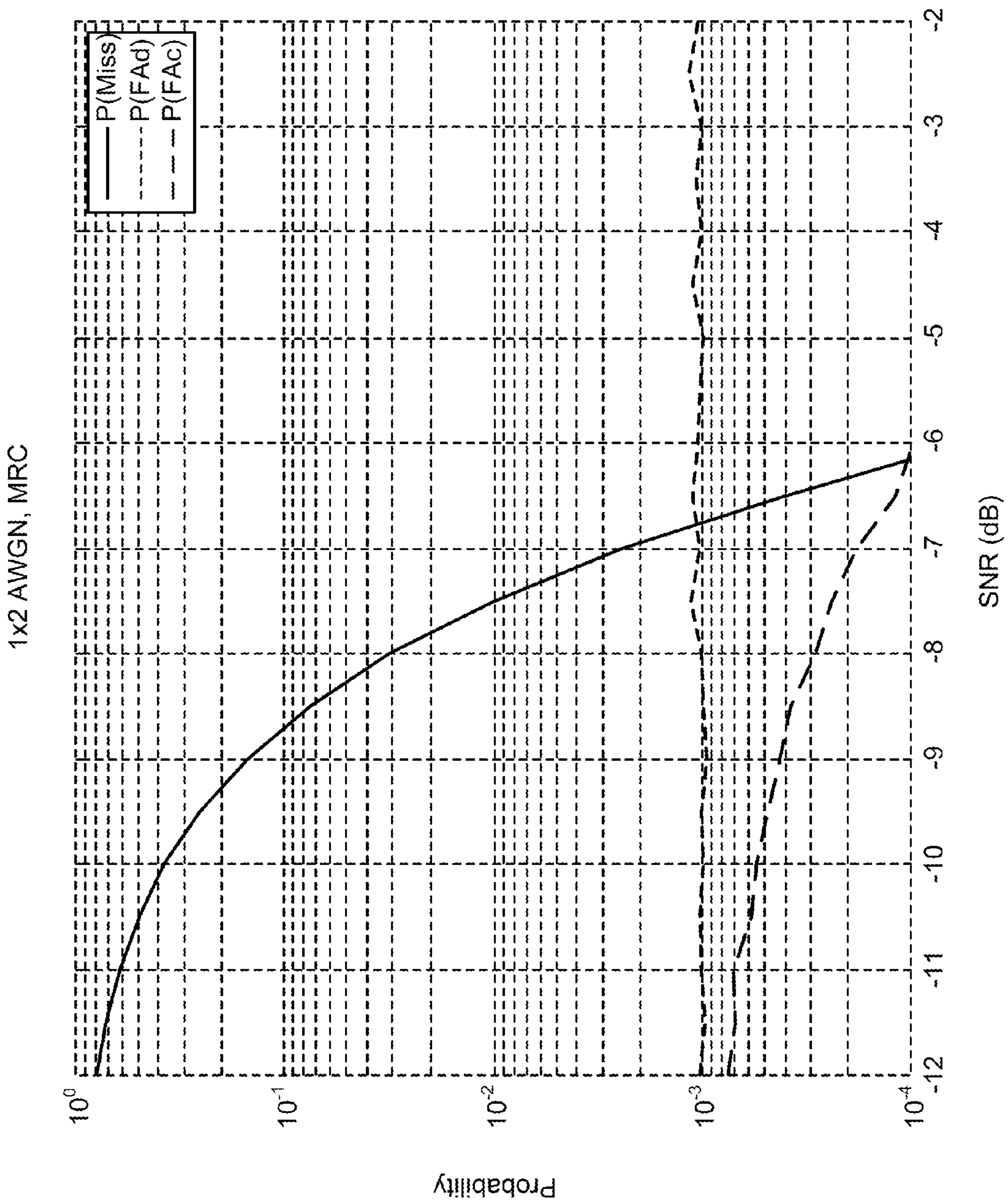
1x2 AWGN, MRC
P(Miss)
P(FAd)
P(FAc)
Probability
SNR (dB)
$10^0$
$10^{-1}$
$10^{-2}$
$10^{-3}$
$10^{-4}$
-12
-11
-10
-9
-8
-7
-6
-5
-4
-3
-2

FIG. 7G

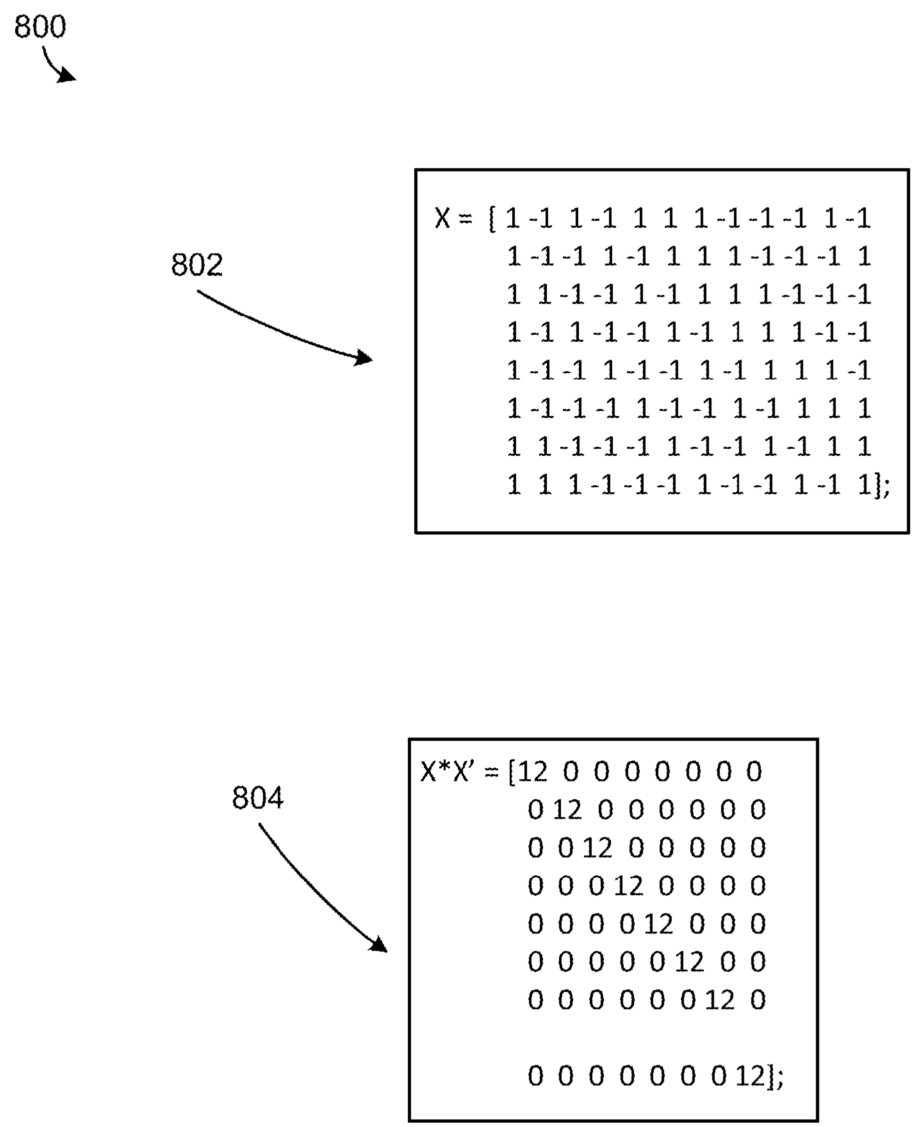
800
802
X = [ 1 -1 1 -1 1 1 1 -1 -1 -1 1 -1
1 -1 -1 1 -1 1 1 1 -1 -1 -1 1
1 1 -1 -1 1 -1 1 1 1 -1 -1 -1
1 -1 1 -1 -1 1 -1 1 1 1 -1 -1
1 -1 -1 1 -1 -1 1 -1 1 1 1 -1
1 -1 -1 -1 1 -1 -1 1 -1 1 1 1
1 1 -1 -1 -1 1 -1 -1 1 -1 1 1
1 1 1 -1 -1 -1 1 -1 -1 1 -1 1];
804
X*X' = [12 0 0 0 0 0 0 0
0 12 0 0 0 0 0 0
0 0 12 0 0 0 0 0
0 0 0 12 0 0 0 0
0 0 0 0 12 0 0 0
0 0 0 0 0 12 0 0
0 0 0 0 0 0 12 0
0 0 0 0 0 0 0 12];

FIG. 8

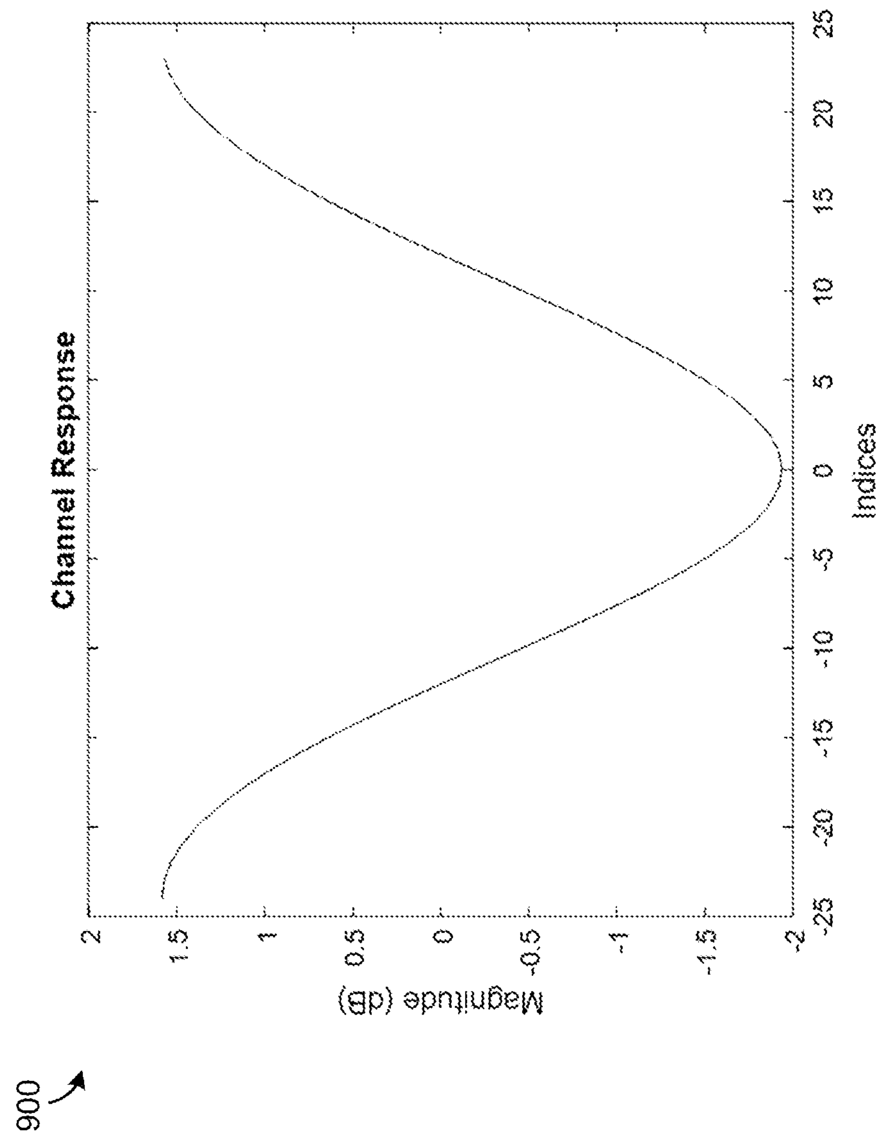
900
Channel Response
Magnitude (dB)
2
1.5
1
0.5
0
-0.5
-1
-1.5
-2
-25
-20
-15
-10
-5
0
5
10
15
20
25
Indices

FIG. 9A

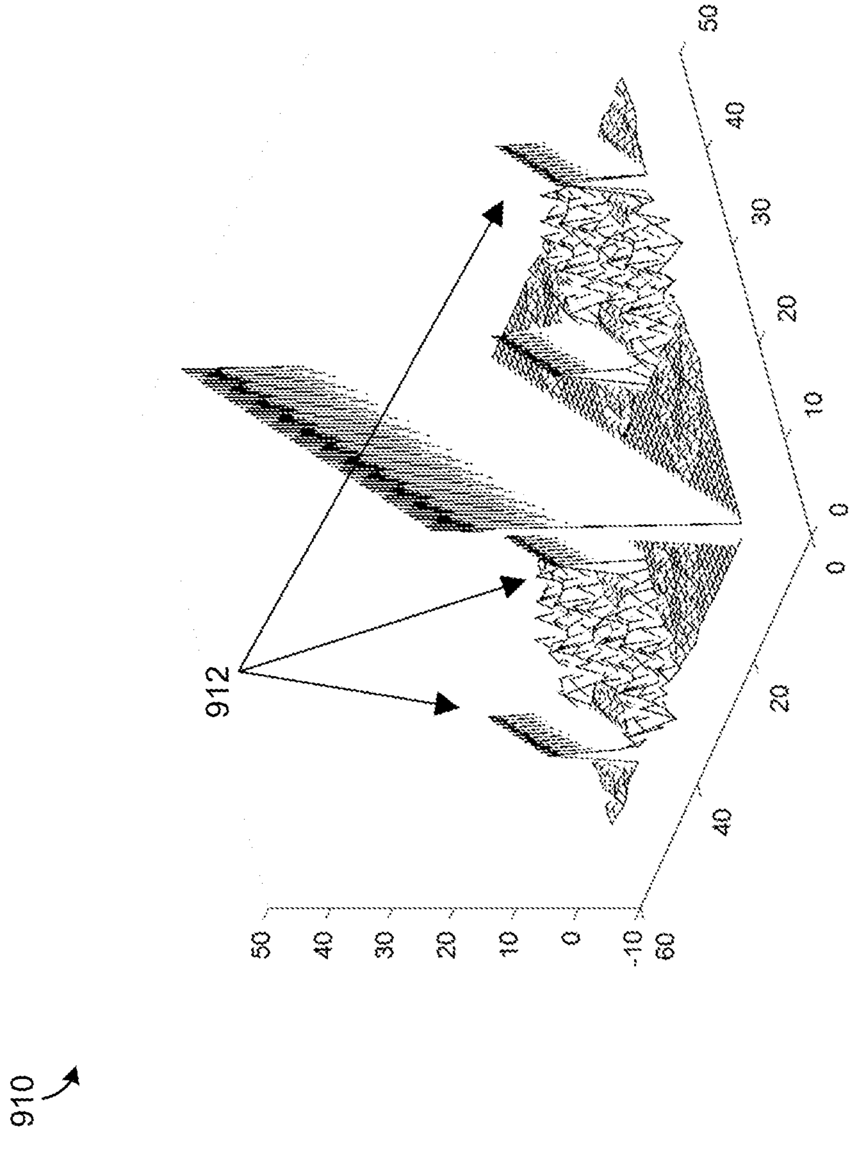


FIG. 9B

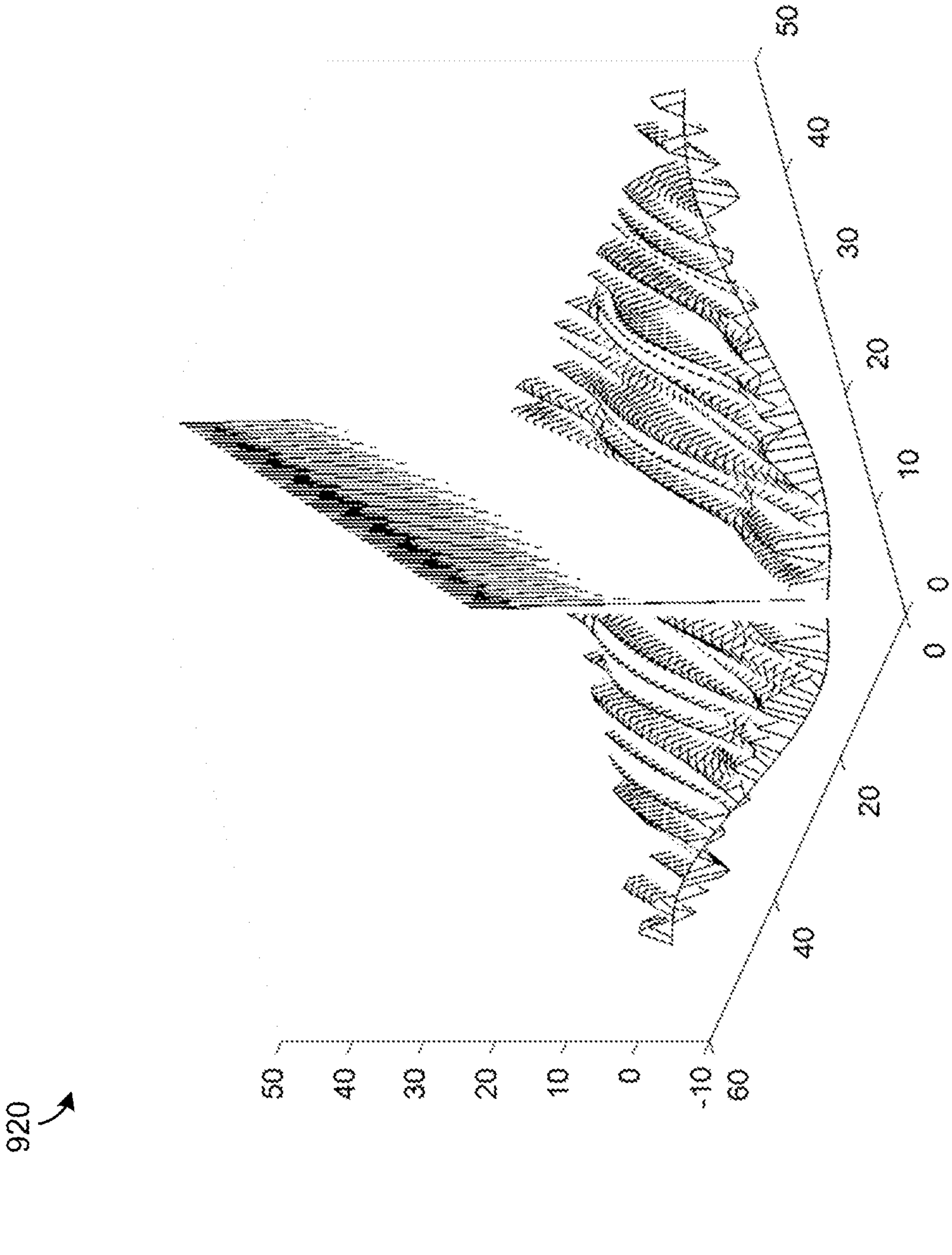


FIG. 9C

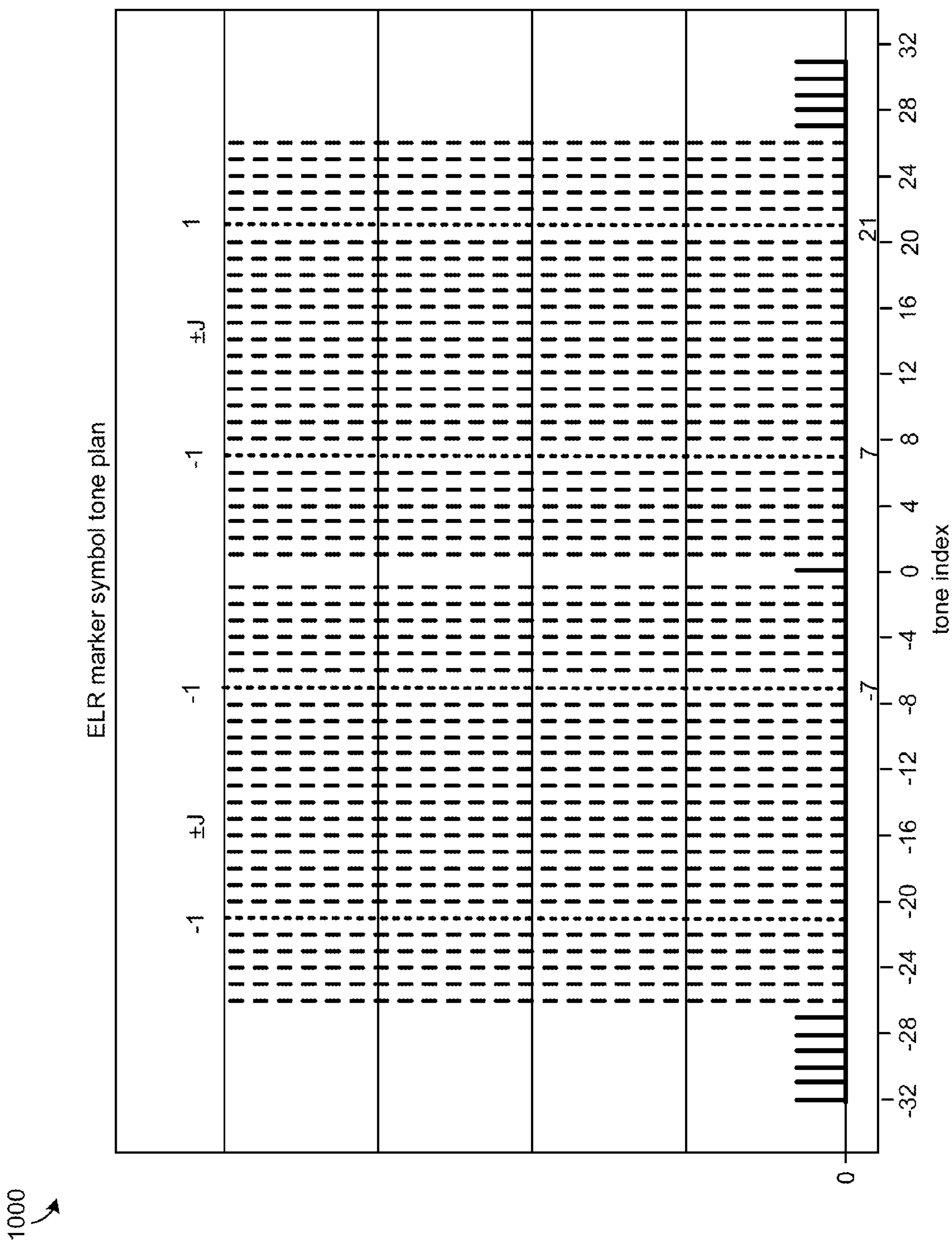
1000
ELR marker symbol tone plan
-1
±J
-1
-1
±J
1
-7
7
21
0
-32
-28
-24
-20
-16
-12
-8
-4
0
4
8
12
16
20
24
28
32
tone index

FIG. 10

1100

**Q-BPSK-32x48 ELR mark base Matrix,** H

[
-1,-1,-1,-1,1,-1,-1,-1,-1,1,1,-1,1,-1,1,-1,-1,-1,1,1,-1,1,1,-1,-1,1,-1,-1,1,1,1,-1,1,-1,1,-1,-1,1,1,1,1,-1,1,1,1,1,1,-1
1,-1,-1,-1,-1,1,1,-1,1,-1,1,-1,-1,-1,1,1,-1,1,1,-1,-1,1,-1,-1,1,1,1,-1,1,-1,1,-1,-1,1,1,1,1,-1,1,1,1,1,1,-1,-1,-1,-1,-1
-1,-1,-1,-1,1,1,-1,1,-1,1,-1,-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1
-1,-1,-1,1,1,-1,1,-1,1,-1,-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1
-1,-1,1,1,-1,1,-1,1,-1,-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1
-1,1,1,-1,1,-1,1,-1,-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1,-1
1,1,-1,1,-1,1,-1,-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1,-1,-1
1,-1,1,-1,1,-1,-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1,-1,1,-1
1,-1,1,-1,-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1,-1,1,1,-1,-1
-1,1,-1,-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1,-1,1,1,-1,1,-1
1,-1,-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1,-1,1,1,-1,1,-1,-1
-1,-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1,-1,1,1,-1,1,-1,1,-1
-1,-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1,-1,1,1,-1,1,-1,1,-1,-1
-1,1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1,-1,1,1,-1,1,-1,1,-1,-1,-1
1,1,-1,1,1,-1,-1,1,-1,-1,1,1,1,-1,1,-1,1,-1,-1,1,1,1,1,-1,1,1,1,1,1,-1,-1,-1,-1,1,-1,-1,-1,-1,1,1,-1,1,-1,1,-1,-1,-1,-1
-1,1,1,-1,-1,1,-1,-1,1,1,1,-1,1,-1,1,-1,-1,1,1,1,1,-1,1,1,1,1,1,-1,-1,-1,-1,1,-1,-1,-1,-1,1,1,-1,1,-1,1,-1,-1,-1,1,1,-1
-1,-1,1,-1,-1,1,1,1,-1,1,-1,1,-1,-1,1,1,1,1,-1,1,1,1,1,1,-1,-1,-1,-1,1,-1,-1,-1,-1,1,1,-1,1,-1,1,-1,-1,-1,1,1,-1,1,1,-1
-1,1,-1,-1,1,1,1,-1,1,-1,1,-1,-1,1,1,1,1,-1,1,1,1,1,1,-1,-1,-1,-1,1,-1,-1,-1,-1,1,1,-1,1,-1,1,-1,-1,-1,1,1,-1,1,1,-1,-1
1,-1,-1,1,1,1,-1,1,-1,1,-1,-1,1,1,1,1,-1,1,1,1,1,1,-1,-1,-1,-1,1,-1,-1,-1,-1,1,1,-1,1,-1,1,-1,-1,-1,1,1,-1,1,1,-1,-1,-1
-1,-1,1,1,1,-1,1,-1,1,-1,-1,1,1,1,1,-1,1,1,1,1,1,-1,-1,-1,-1,1,-1,-1,-1,-1,1,1,-1,1,-1,1,-1,-1,-1,1,1,-1,1,1,-1,-1,1,-1
-1,1,1,1,-1,1,-1,1,-1,-1,1,1,1,1,-1,1,1,1,1,1,-1,-1,-1,-1,1,-1,-1,-1,-1,1,1,-1,1,-1,1,-1,-1,-1,1,1,-1,1,1,-1,-1,1,-1,-1
1,1,1,-1,1,-1,1,-1,-1,1,1,1,1,-1,1,1,1,1,1,-1,-1,-1,-1,1,-1,-1,-1,-1,1,1,-1,1,-1,1,-1,-1,-1,1,1,-1,1,1,-1,-1,1,-1,-1,-1
1,1,-1,1,-1,1,-1,-1,1,1,1,1,-1,1,1,1,1,1,-1,-1,-1,-1,1,-1,-1,-1,-1,1,1,-1,1,-1,1,-1,-1,-1,1,1,-1,1,1,-1,-1,1,-1,-1,1,-1
1,-1,1,-1,1,-1,-1,1,1,1,1,-1,1,1,1,1,1,-1,-1,-1,-1,1,-1,-1,-1,-1,1,1,-1,1,-1,1,-1,-1,-1,1,1,-1,1,1,-1,-1,1,-1,-1,1,1,-1
-1,1,-1,1,-1,-1,1,1,1,1,-1,1,1,1,1,1,-1,-1,-1,-1,1,-1,-1,-1,-1,1,1,-1,1,-1,1,-1,-1,-1,1,1,-1,1,1,-1,-1,1,-1,-1,1,1,1,-1
1,-1,1,-1,-1,1,1,1,1,-1,1,1,1,1,1,-1,-1,-1,-1,1,-1,-1,-1,-1,1,1,-1,1,-1,1,-1,-1,-1,1,1,-1,1,1,-1,-1,1,-1,-1,1,1,1,-1,-1
-1,-1,1,1,1,1,-1,1,1,1,1,1,-1,-1,-1,-1,1,-1,-1,-1,-1,1,1,-1,1,-1,1,-1,-1,-1,1,1,-1,1,1,-1,-1,1,-1,-1,1,1,1,-1,1,-1,1,-1
-1,1,1,1,1,-1,1,1,1,1,1,-1,-1,-1,-1,1,-1,-1,-1,-1,1,1,-1,1,-1,1,-1,-1,-1,1,1,-1,1,1,-1,-1,1,-1,-1,1,1,1,-1,1,-1,1,-1,-1
1,1,1,1,-1,1,1,1,1,1,-1,-1,-1,-1,1,-1,-1,-1,-1,1,1,-1,1,-1,1,-1,-1,-1,1,1,-1,1,1,-1,-1,1,-1,-1,1,1,1,-1,1,-1,1,-1,-1,-1
1,1,1,-1,1,1,1,1,1,-1,-1,-1,-1,1,-1,-1,-1,-1,1,1,-1,1,-1,1,-1,-1,-1,1,1,-1,1,1,-1,-1,1,-1,-1,1,1,1,-1,1,-1,1,-1,-1,1,-1
1,-1,1,1,1,1,1,-1,-1,-1,-1,1,-1,-1,-1,-1,1,1,-1,1,-1,1,-1,-1,-1,1,1,-1,1,1,-1,-1,1,-1,-1,1,1,1,-1,1,-1,1,-1,-1,1,1,1,-1
1,1,1,1,1,-1,-1,-1,-1,1,-1,-1,-1,-1,1,1,-1,1,-1,1,-1,-1,-1,1,1,-1,1,1,-1,-1,1,-1,-1,1,1,1,-1,1,-1,1,-1,-1,1,1,1,1,-1,-1]

1102

$$\hat{H} = \begin{pmatrix} H & +H\mathbb{J} \\ H & -H\mathbb{J} \end{pmatrix}$$

1104

$$\mathbb{J} = \begin{pmatrix} 0 & 0 & \cdots & \cdots & 1 \\ 0 & \vdots & \ddots & 1 & 0 \\ \vdots & \ddots & \ddots & \vdots & \vdots \\ 1 & 0 & 0 & \ddots & 0 \end{pmatrix}$$

FIG. 11

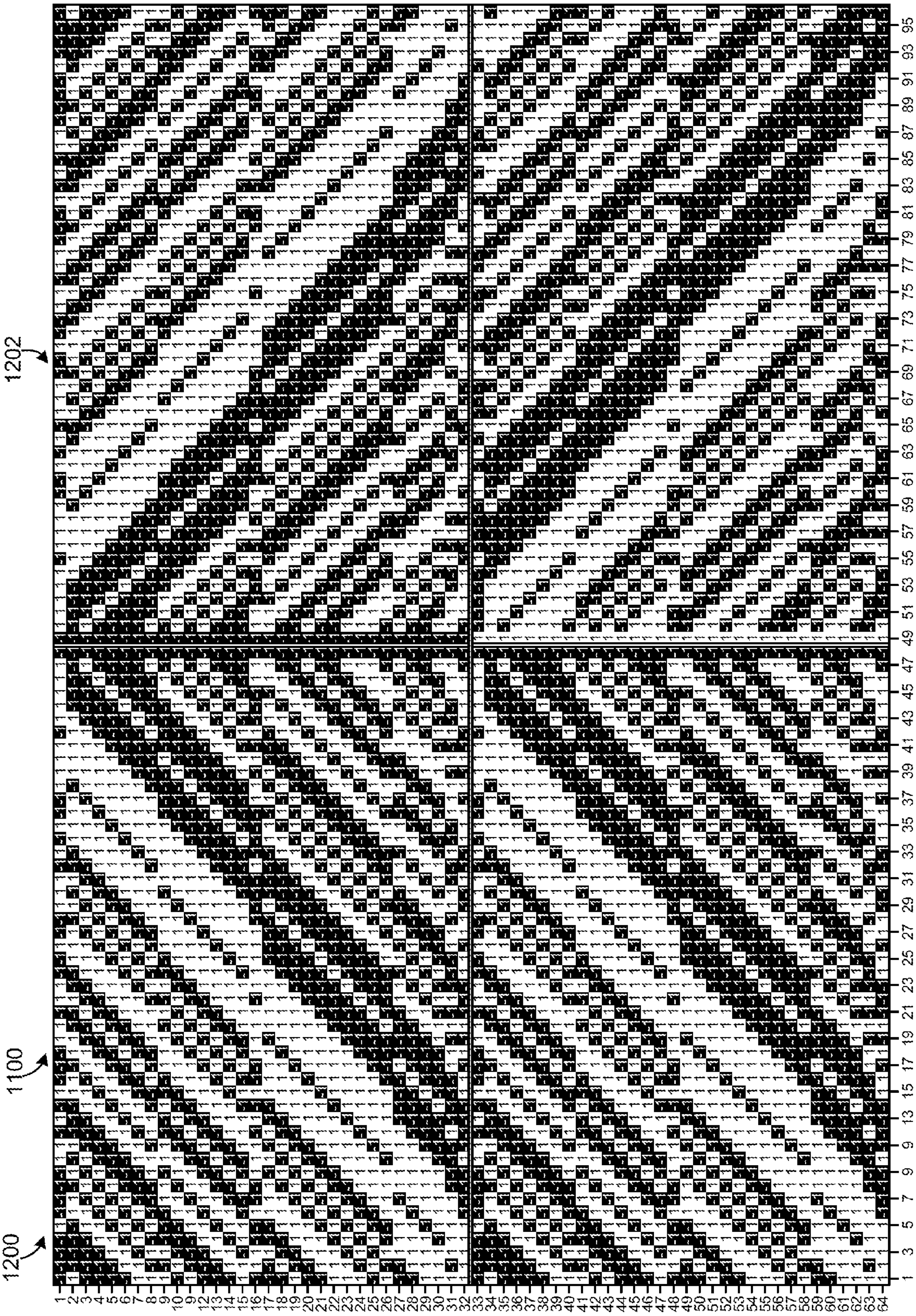


FIG. 12

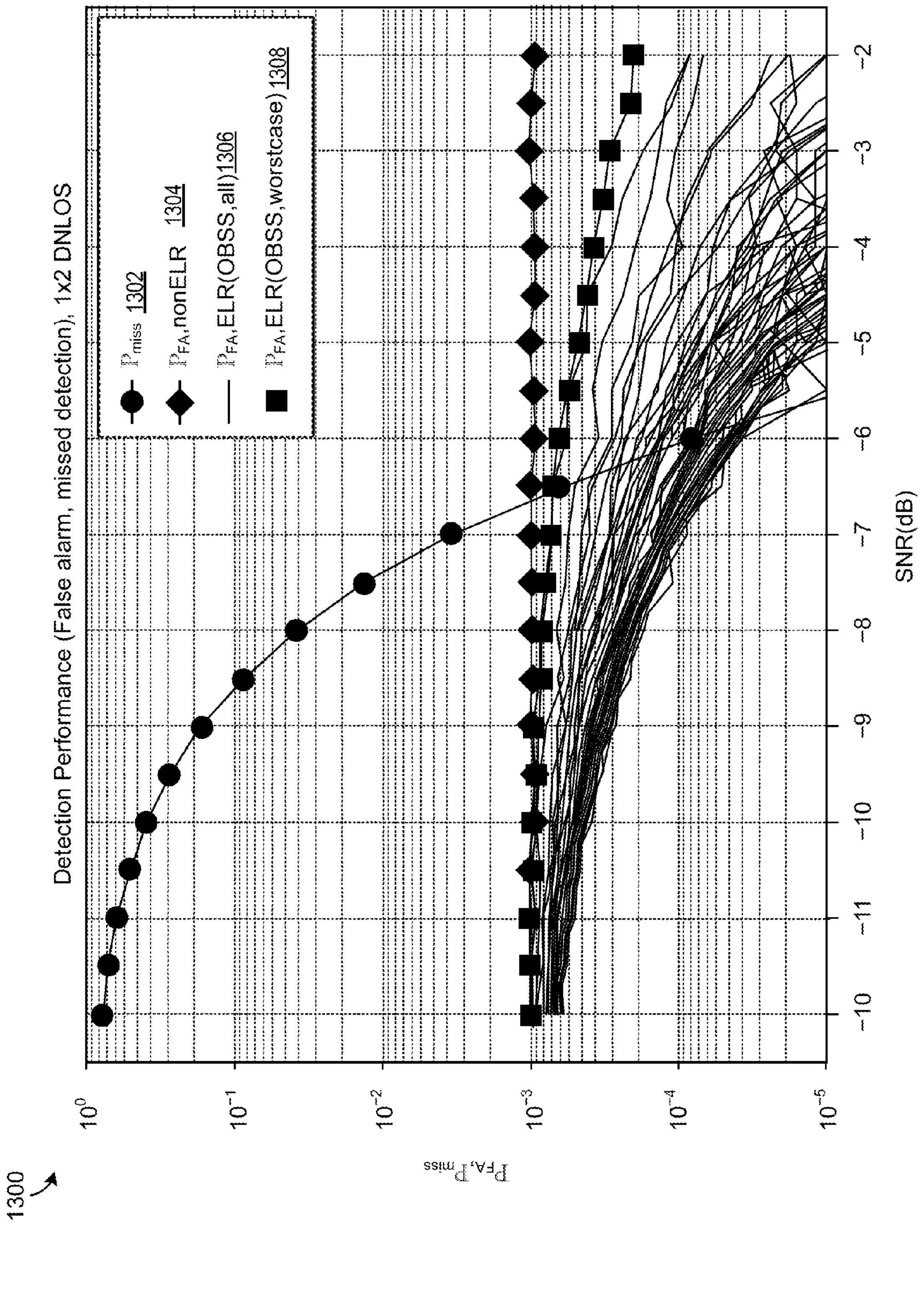
1300
Detection Performance (False alarm, missed detection), 1x2 DNLOS
$P_{miss}$ 1302
$P_{FA}$,nonELR 1304
$P_{FA}$,ELR(OBSS,all)1306
$P_{FA}$,ELR(OBSS,worstcase) 1308
$P_{FA}$, $P_{miss}$
$10^{0}$
$10^{-1}$
$10^{-2}$
$10^{-3}$
$10^{-4}$
$10^{-5}$
−10
−11
−10
−9
−8
−7
−6
−5
−4
−3
−2
SNR(dB)

FIG. 13A

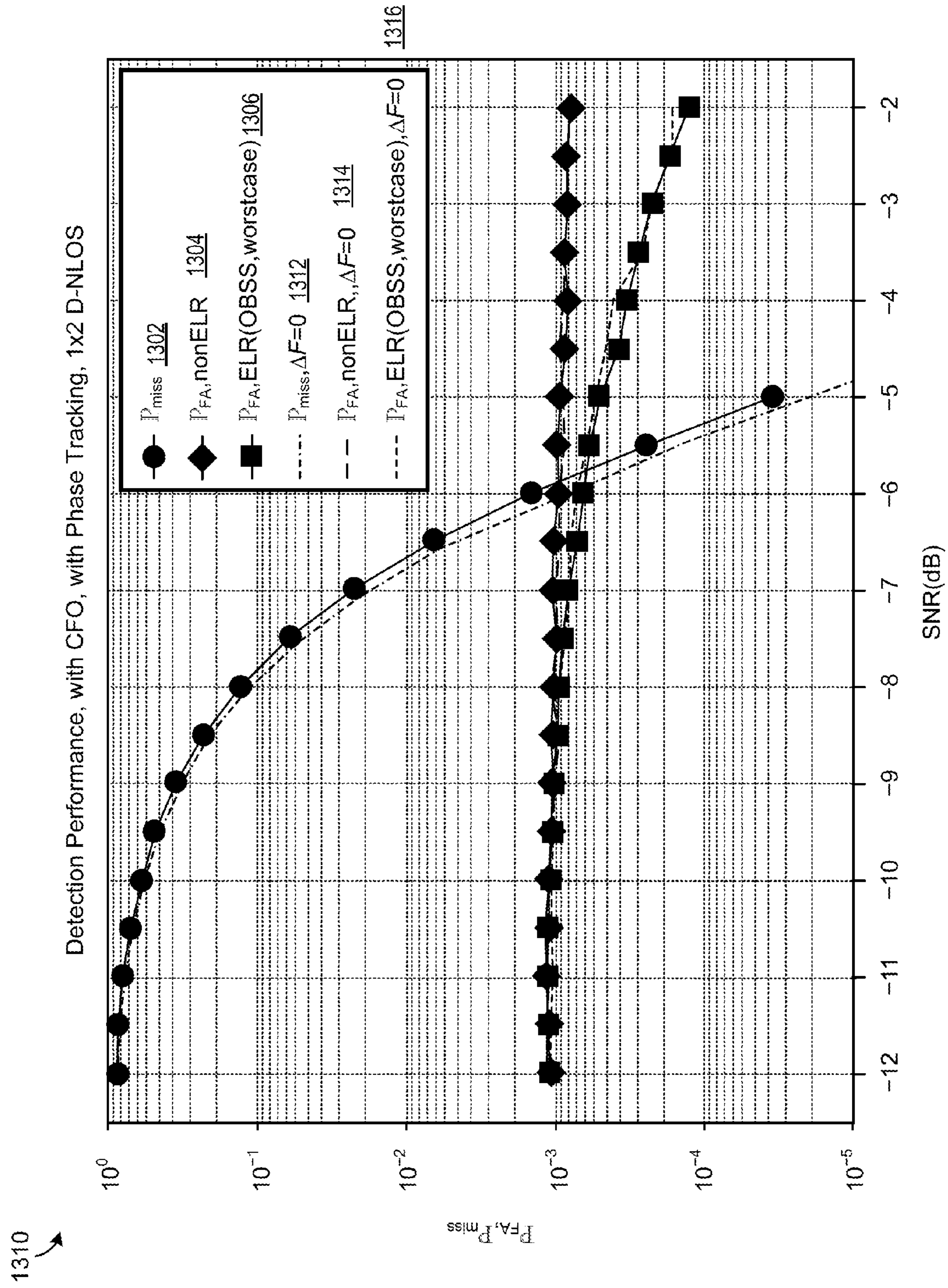
1310
Detection Performance, with CFO, with Phase Tracking, 1x2 D-NLOS
P_miss 1302
P_FA,nonELR 1304
P_FA,ELR(OBSS,worstcase) 1306
P_miss,ΔF=0 1312
P_FA,nonELR,,ΔF=0 1314
P_FA,ELR(OBSS,worstcase),ΔF=0 1316
P_FA,P_miss
10^0
10^-1
10^-2
10^-3
10^-4
10^-5
−12
−11
−10
−9
−8
−7
−6
−5
−4
−3
−2
SNR(dB)

FIG. 13B

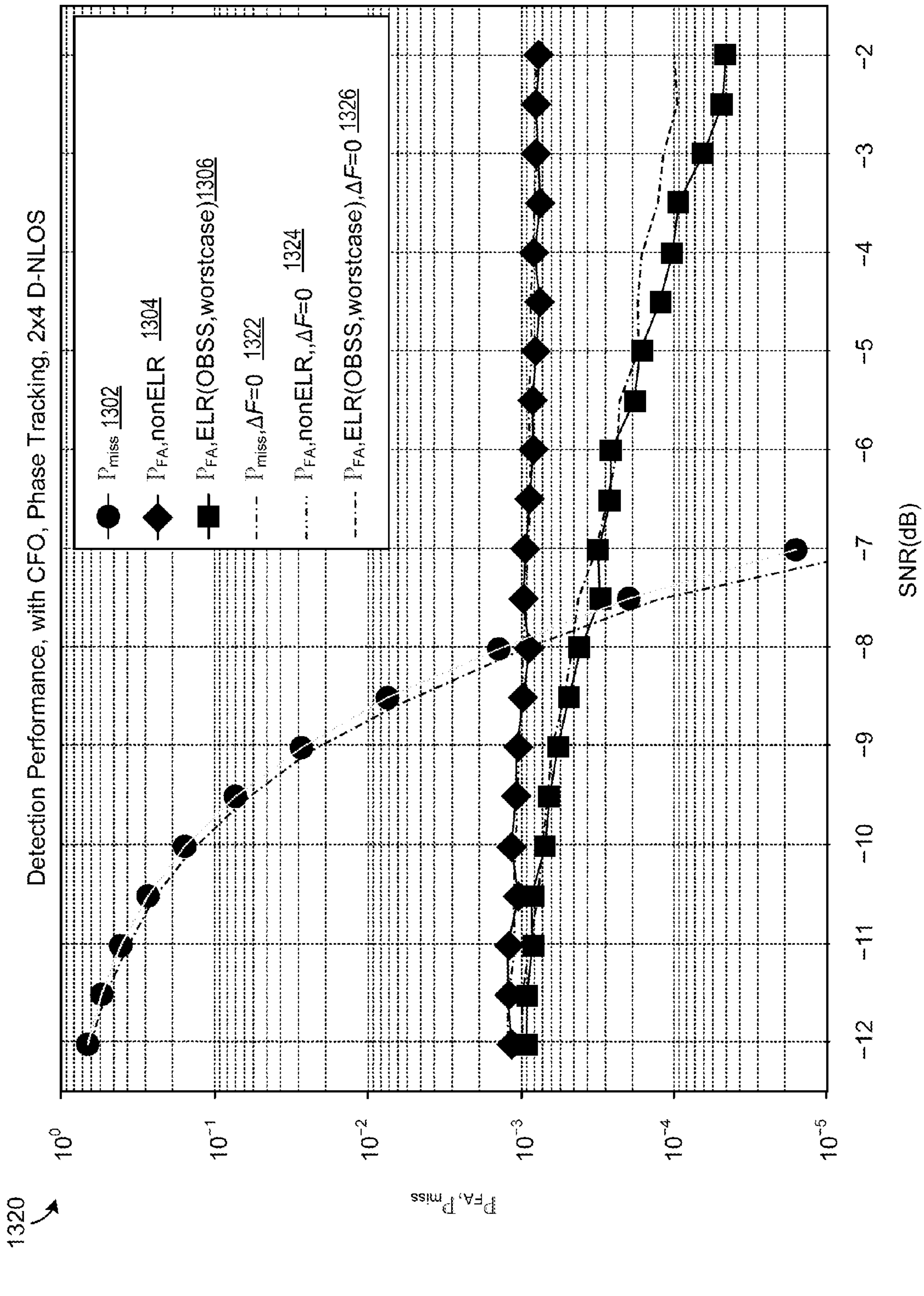
1320
Detection Performance, with CFO, Phase Tracking, 2x4 D-NLOS
$P_{miss}$ 1302
$P_{FA}$,nonELR 1304
$P_{FA}$,ELR(OBSS,worstcase)1306
$P_{miss}$,$\Delta F$=0 1322
$P_{FA}$,nonELR,,$\Delta F$=0 1324
$P_{FA}$,ELR(OBSS,worstcase),$\Delta F$=0 1326
$P_{FA}$, $P_{miss}$
$10^0$
$10^{-1}$
$10^{-2}$
$10^{-3}$
$10^{-4}$
$10^{-5}$
−12
−11
−10
−9
−8
−7
−6
−5
−4
−3
−2
SNR(dB)

FIG. 13C

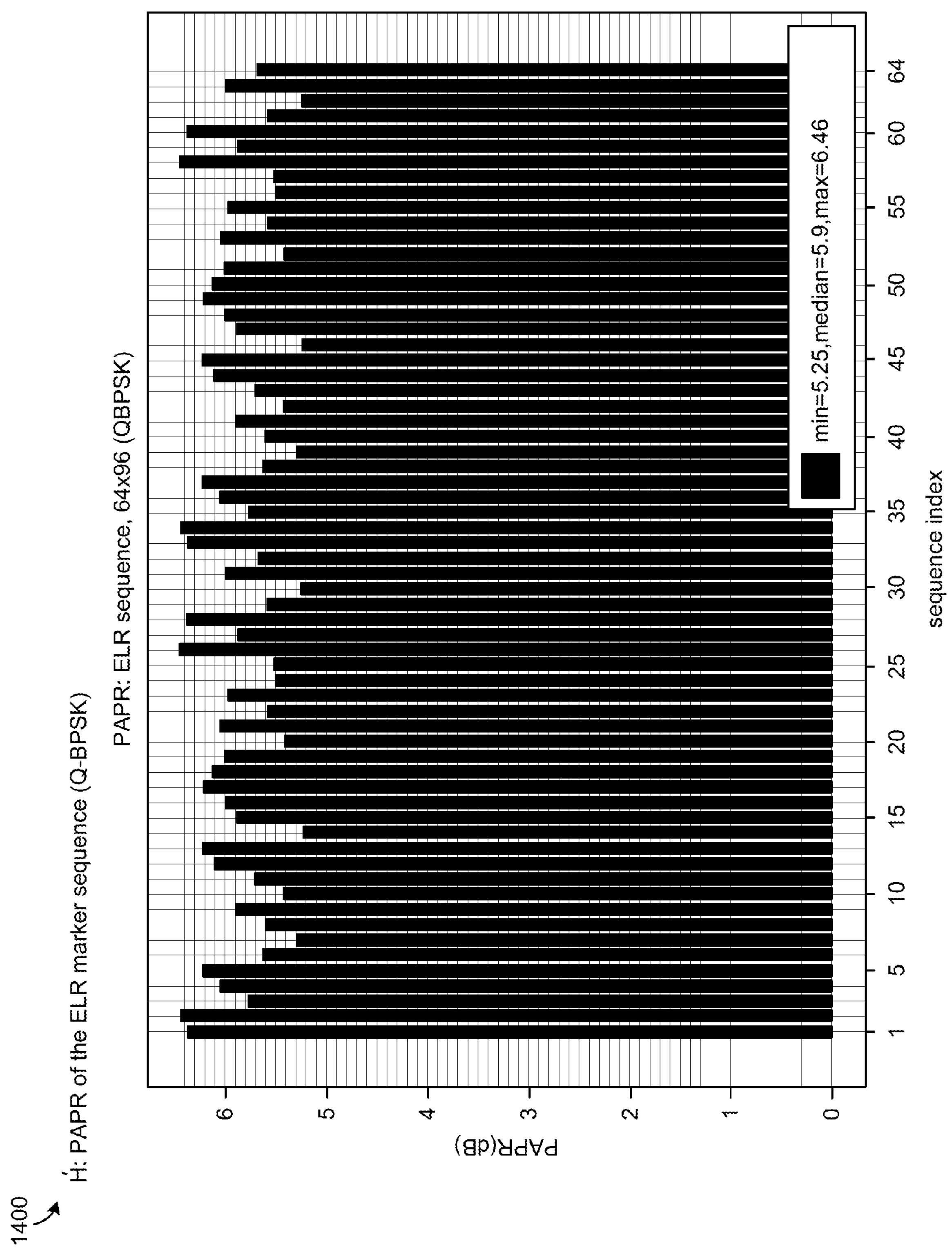
1400
H́: PAPR of the ELR marker sequence (Q-BPSK)
PAPR: ELR sequence, 64x96 (QBPSK)
min=5.25,median=5.9,max=6.46
PAPR(dB)
sequence index
0
1
2
3
4
5
6
1
5
10
15
20
25
30
35
40
45
50
55
60
64

FIG. 14

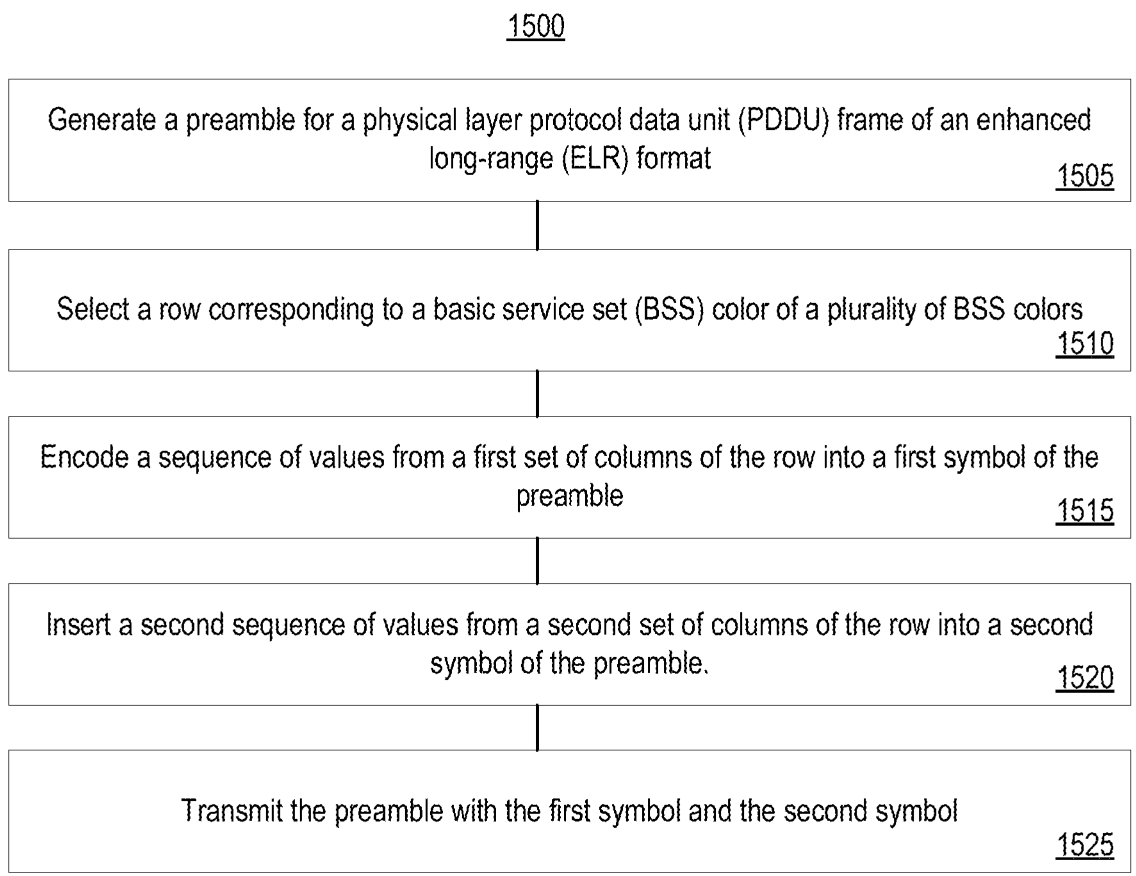
1500
Generate a preamble for a physical layer protocol data unit (PDDU) frame of an enhanced long-range (ELR) format
1505
Select a row corresponding to a basic service set (BSS) color of a plurality of BSS colors
1510
Encode a sequence of values from a first set of columns of the row into a first symbol of the preamble
1515
Insert a second sequence of values from a second set of columns of the row into a second symbol of the preamble.
1520
Transmit the preamble with the first symbol and the second symbol
1525

FIG. 15

Europäisches Patentamt
European Patent Office
Office européen des brevets

# EUROPEAN SEARCH REPORT

Application Number
EP 25 18 3376

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 397 035 B2 (LG ELECTRONICS INC [KR]) 27 August 2019 (2019-08-27)<br>* column 22, line 1 - line 29; figures 12, 13 *<br>----- | 1-15 | INV.<br>H04L27/26 |
| A | US 2018/069659 A1 (ZHANG JIAYIN [CA] ET AL) 8 March 2018 (2018-03-08)<br>* paragraph [0051] - paragraph [0103] *<br>----- | 1-15 | |
| A | US 2017/359300 A1 (PATIL ABHISHEK PRAMOD [US] ET AL) 14 December 2017 (2017-12-14)<br>* paragraph [0005] - paragraph [0022] *<br>----- | 1-15 | |
| | | | TECHNICAL FIELDS SEARCHED (IPC) |
| | | | H04L |

The present search report has been drawn up for all claims

1

| Place of search | Date of completion of the search | Examiner |
|---|---|---|
| Berlin | 31 October 2025 | Stefan, Andrei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 18 3376

This annex lists the patent family members relating to the patent documents cited in the above-mentioned European search report. The members are as contained in the European Patent Office EDP file on
The European Patent Office is in no way liable for these particulars which are merely given for the purpose of information.

31-10-2025

| Patent document cited in search report | Publication date | Patent family member(s) | Publication date |
|---|---|---|---|
| US 10397035 B2 | 27-08-2019 | US 2018091347 A1 | 29-03-2018 |
| | | WO 2016159476 A1 | 06-10-2016 |
| US 2018069659 A1 | 08-03-2018 | CN 107615839 A | 19-01-2018 |
| | | EP 3294020 A1 | 14-03-2018 |
| | | US 2018069659 A1 | 08-03-2018 |
| | | WO 2016183749 A1 | 24-11-2016 |
| US 2017359300 A1 | 14-12-2017 | BR 112018075006 A2 | 12-03-2019 |
| | | CA 3024319 A1 | 21-12-2017 |
| | | CN 109314911 A | 05-02-2019 |
| | | EP 3469833 A1 | 17-04-2019 |
| | | JP 6985300 B2 | 22-12-2021 |
| | | JP 2019517759 A | 24-06-2019 |
| | | KR 20190018138 A | 21-02-2019 |
| | | US 2017359300 A1 | 14-12-2017 |
| | | WO 2017218556 A1 | 21-12-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63661994
- US 63680313